# EUROPÄISCHE PATENTSCHRIFT

(11) **EP 3 426 860 B1**
(45) Veröffentlichungstag und Bekanntmachung des Hinweises auf die Patenterteilung: **07.04.2021**
(21) Anmeldenummer: 17707849.0
(22) Anmeldetag: 28.02.2017
(51) Int. Cl.: E04C 5/07, B29B 15/12

(54) **BETONBAUTEIL MIT BEWEHRUNGSELEMENT, VERFAHREN ZU DESSEN HERSTELLUNG, VERFAHREN ZUM BIEGEN EINES BEWEHRUNGSSTABES EINES BEWEHRUNGSELEMENTS**
CONCRETE COMPONENT HAVING A REINFORCING ELEMENT, METHOD FOR PRODUCING SAME AND METHOD FOR BENDING A REINFORCING BAR OF A REINFORCING ELEMENT
ÉLÉMENT STRUCTURAL EN BÉTON DOTÉ D'UN ÉLÉMENT D'ARMATURE, PROCÉDÉ DE FABRICATION ASSOCIÉ ET PROCÉDÉ DE CINTRAGE D'UNE BARRE D'ARMATURE D'UN ÉLÉMENT D'ARMATURE

(30) Priorität: 07.03.2016 DE 102016104071
(43) Veröffentlichungstag der Anmeldung: 16.01.2019
(73) Patentinhaber: Solidian GmbH, 72458 Albstadt (DE)
(72) Erfinder: BISCHOFF, Thomas, 72406 Bisingen (DE); HINZEN, Marcus, 72458 Albstadt (DE); TOSKAS, Georgios, 72657 Altenriet (DE)
(74) Vertreter: Rüger Abel Patentanwälte PartGmbB
(86) Internationale Anmeldenummer: PCT/EP2017/054575
(87) Internationale Veröffentlichungsnummer: WO 2017/153202

(56) Entgegenhaltungen:
- EP-A1- 2 666 922
- WO-A1-97/19226
- WO-A1-98/15403
- WO-A1-2013/170313
- Manfred Curbach Et Al.: "Textilbeton in Theorie und Praxis" In: "Tagungsband zum 6. Kolloquium zu textilbewehrten Tragwerken (CTRS6", 19. September 2011 (2011-09-19), XP055275110, Seite 528, Abbildungen 2,6 Tabellen 1,2 das ganze Dokument

## Beschreibung

Die Erfindung betrifft ein Betonbauteil mit einem nicht-metallischen, formbaren Bewehrungselement zur Bewehrung des Betonbauteils, ein Verfahren zu dessen Herstellung und ein Verfahren zum Biegen eines Bewehrungsstabes eines Bewehrungselements. Beispielsweise kann das Bewehrungselement Bestandteil eines Betonbauteils sein, um die Tragfähigkeit des Betonbauteils zu erhöhen.

Verstärkungen für Kunststoffe sind heute bekannt und werden im Kunststoffbau bereits vielfältig verwendet. Solche Verstärkungen müssen verschiedene Anforderungen erfüllen. Insbesondere sollen sie die mechanische Festigkeit von Verbundwerkstoffteilen erhöhen (Zugfestigkeit, Zugsteifigkeit, Rissüberbrückung). Die Verstärkungselemente müssen nicht nur die Festigkeit bewirken, sondern müssen auch zusammen mit der Kunststoffmatrix eine Formgebung des Verbundwerkstoffes ermöglichen, beispielsweise beim Bau von Booten, Flugzeugen, Fahrrädern, usw. DE 10 2011 087 226 A1 beschreibt ein pseudo-thermoplastisches, selbstvernetzendes Verbundmaterial, das für den Kunststoffbau eingesetzt werden kann und eine Kunststoffmatrix aus einem reversibel quervernetzten Kunststoff aufweist.

Bewehrungen für die Verstärkung von Bauwerken aus mineralischen Bindemitteln unterliegen anderen Anforderungen als ein Verbundmaterial für Kunststoffbauteile. Sie müssen resistent sein gegen die im mineralischen Betonbauteil verwendeten Medien, insbesondere gegenüber alkalischen Substanzen. Ferner muss eine Temperaturbeständigkeit von bis zu 80°C dauerhaft gegeben sein. Schließlich sollen sich solche Bewehrungen einfach und kostengünstig herstellen lassen und vor Ort auf der Baustelle einfach zu handhaben sein. Gerade auf Baustellen besteht der Bedarf, dass Personen, die über kein oder wenig Fachwissen verfügen, ein Betonbauteil fehlerfrei und einfach erstellen können.

US 6 612 085 B2 beschreibt einen Bewehrungsstab für Betonstrukturen. Der Bewehrungsstab ist aus einem Verbundwerkstoff aus einem depolymerisierbaren und repolymerisierbaren thermoplastischen Harz und längsorientierten Verstärkungsfasern gebildet. Dadurch soll eine geringe Viskosität bei der Verarbeitung erreicht werden. Durch den Aufbau des Bewehrungsstabes soll es möglich sein, diesen in beliebige verschiedene Formen zu bringen. Beim Depolymerisieren und Repolymerisieren werden die Polymerketten in Längsrichtung aufgebrochen bzw. wieder zusammengesetzt. Dadurch kann der thermoplastische Bewehrungsstab durch Erwärmen besser formbar gemacht werden, in die gewünschte Form gebracht und anschließend durch Kühlen wieder fest werden. Nach dem Abkühlen bleibt der Kunststoff ein Thermoplast.

Ein weiteres Bewehrungselement ist in US 6 023 903 A beschrieben. Es besteht aus Verstärkungsfasern, die in ein Harz eingebunden sind. Das Bewehrungselement hat mehrere Flansche, die von einem Kern wegragen, so dass sich im Querschnitt eine kreuz- oder sternförmige Gestalt ergibt. In den Kern wird an der Stelle, an der das Bewehrungselement gebogen werden soll, ein Schlitz eingebracht, so dass ein Flansch, der an der Biegestelle gekrümmt werden soll, vom Kern getrennt ist. Dadurch wird ein Biegen des Bewehrungselements ermöglicht, was ansonsten durch die im Querschnitt kreuz- oder sternförmige Struktur behindert würde.

WO 97/19226A1 beschreibt ein Bewehrungselement und ein Verfahren zu dessen Verwendung in einem Produkt. Das Bewehrungselement besteht aus einem Gitter aus Textilfasersträngen. Das Gitter ist mit einem duromeren Harz im B-Zustand imprägnierbar. Nach dem Anbringen an einem Produkt kann die Faserbewehrung vollständig ausgehärtet werden und behält dann aufgrund der duromeren Eigenschaften der Kunststoffmatrix ihre Form bei.

WO 97/19226A1 offenbart ein Betonbauteil mit einer Betonmatrix, in die wenigstens ein Bewehrungselement zur Bewehrung eingebettet ist, wobei das Bewehrungselement wenigstens einen Bewehrungsteil in Form eines Bewehrungsstabes aufweist, wobei sich der wenigstens eine Bewehrungsstab in einer Erstreckungsrichtung erstreckt und wenigstens einen Verstärkungsfaden aufweist, und wobei der wenigstens eine Verstärkungsfaden in einer Kunststoffmatrix des Bewehrungsstabes angeordnet ist, die aus einem reversibel quervernetzten Kunststoff besteht, wobei sich zumindest einer der vorhandenen Bewehrungsstäbe in wenigstens einem Stababschnitt oder über seine gesamte Länge geradlinig erstreckt.

EP 2 666 922 A1 offenbart die Verwendung eines thermoplastischen Harzes für die Textilbewehrung eines Betonbauelements. Im Unterschied zu duromeren Kunststoffen sind keine Quervernetzungen vorhanden, vielmehr sind die Molekülketten durch zwischenmolekulare Kräfte miteinander verbunden.

Aus der Veröffentlichung Manfred Cobach et al.: "Textilbeton in Theorie und Praxis", in: "Tagungsband zum 6. Kolloquium zu textilbewehrten Tragwerken", 19./20.09.2011 findet sich auf Seiten 15-26 ein Artikel von T. Gries et al.: "Textile Verstärkungsstrukturen - Übersicht der Forschungsaktivitäten im Rahmen des SFB532", bei dem alkalibeständige Glas- und Carbonrovings für Bewehrungen untersucht wurden. Es *wird* vorgeschlagen, als Kunststoffmatrix für die Bewehrungen Epoxidharz, Polyurethan oder Styrol-Butadien-Kautschuk (SBR) zu verwenden.

Aus WO 2013/170313 A1 sind Epoxidharze bekannt, die einen Selbstheilungseffekt haben sollen, um beispielsweise verkratzte Epoxidharzoberflächen reparieren zu können.

Als Kunststoffmatrix für solche Verbundwerkstoff-Bewehrungen werden in der Praxis hauptsächlich duromere Harze verwendet, beispielsweise Epoxidharz, Vinylesterharz oder Polyesterharz. Thermoplastische Harze werden bislang in der Praxis nicht verwendet, da die dauerhaften Einsatztemperaturen zu niedrig sind. Zudem neigen die Thermoplaste zum Kriechen und können daher die Festigkeit des Betonbauteils herabsetzen. Hochtemperaturthermoplaste sind wiederum teuer und müssen teilweise bei sehr hohen Temperaturen verarbeitet werden, was die Kosten zusätzlich erhöht. Die Verbundqualität mit den eingebetteten Fasern ist bei Thermoplasten zudem problematisch. Es gibt nur wenige Faser - bzw. Rovingtypen mit einer Schlichte, die einen ausreichend guten Verbund zur thermoplastischen Kunststoffmatrix gewährleistet.

Ein Großteil der Bewehrungen, insbesondere der Stahlbewehrungen auf den Baustellen, sind vorkonfektioniert. Dies betrifft vor allem Schub- und Anschlussbewehrungen. Um komplett stahlfreie Betonbauteile aus Verbundwerkstoffbewehrungen herstellen zu können, ist es notwendig, nicht nur ebene, flächige Bewehrungsgitter oder gerade Bewehrungsstäbe, sondern auch zwei- oder dreidimensional gekrümmte bzw. abgewinkelt verlaufende stab- oder gitterförmige Bewehrungselemente bereitzustellen. Heutzutage werden hierfür die Verbundwerkstoff-Bewehrungselemente an den konkreten Einsatz bei der Herstellung angepasst, einbaufertig hergestellt und an der Baustelle verbaut, insbesondere durch Vergießen eines Betonbauteils. Ist der Verbundwerkstoff vollständig ausgehärtet, kann das vorkonfektionierte Bewehrungselement nicht mehr nachträglich umgeformt werden. Eine Anpassung, beispielsweise um Fertigungstoleranzen vor Ort auf der Baustelle noch auszugleichen, ist bei diesen vorkonfektionierten Bewehrungselementen nicht mehr möglich. Alternativ dazu, in einem noch nicht vollständig ausgehärteten, teilvernetzten Zustand - der als "Stage B" oder auch als Prepreg bezeichnet wird - sind die Bewehrungselemente aus Verbundwerkstoff zwar noch formbar, allerdings nur begrenzt lagerfähig. Denn selbst bei der Lagerung in gekühltem Zustand reagieren solche Prepregs weiter und altern. Außerdem ist der Aufwand für das gekühlte Lagern aufwendig und teuer.

Wenn Prepregs in eine dreidimensional gekrümmte und/oder abgewinkelte Gestalt umgeformt werden sollen, werden sie über eine entsprechende Form gelegt bzw. in eine Form gelegt und ausgehärtet. Dabei sind die Verstärkungsfasern nicht vorgespannt und können abhängig von der Formgebung zumindest stellenweise Wellen bilden. Dies wiederum kann die Zugfestigkeit bzw. die Zugsteifigkeit des Bewehrungselements reduziere

Aufgrund der genannten werkstofflichen Nachteile, der teilweise sehr hohen Werkstoffpreise und der umständlichen Umformung haben sich Betonbauteile mit nicht-metallischen Bewehrungen bisher nicht in der Breite durchgesetzt. Dies gilt, obwohl die Korrosionsproblematik der stahlbewerten Betonbauteile zu hohem Wartungsaufwand und teilweise mangelnder Dauerhaftigkeit wie z.B. im Bereich Brückenbau führt und daher ein großer Bedarf nach Betonbauteilen mit nicht-metallischen Bewehrungen mit vertretbarem Preis-Leistungsverhältnis besteht.

Es kann daher als Aufgabe der vorliegenden Erfindung angesehen werden, ein Betonbauteil mit einem Bewehrungselement zu schaffen, das die vorstehenden Probleme zumindest teilweise löst und dies insbesondere durch eine verbesserte Handhabung bei hoher technischer Leistungsfähigkeit gewährleistet.

Diese Aufgabe wird durch ein Betonbauteil mit den Merkmalen des Patentanspruches 1, ein Verfahren zu dessen Herstellung mit den Merkmalen des Patentanspruches 10 und ein Verfahren zum Biegen mit den Merkmalen des Patentanspruches 11 gelöst.

Es wird ein Betonbauteil mit einem Bewehrungselement aus einem Verbundwerkstoff geschaffen. Das Bewehrungselement ist zur Bewehrung des Betonbauteils in die mineralische Betonmatrix eingebunden. Die Ausgestaltung, Größe, Form, usw. des Bewehrungselements hängt vom Anwendungsfall ab. Das Bewehrungselement weist wenigstens einen Bewehrungsteil in Form eines Bewehrungsstabes auf. Das Bewehrungselement kann durch einen einzigen Bewehrungsteil in Form des Bewehrungsstabes ausgebildet sein. Das Bewehrungselement kann alternativ auch durch eine Mehrzahl von separat hergestellten und anschließend miteinander verbundenen Bewehrungsstäben gebildet sein. Das Bewehrungselement kann auch mehrere Bewehrungsstäbe aufweisen und beispielsweise gitterförmig als Bewehrungsgitter ausgeführt sein. Mehrere Bewehrungsstäbe können miteinander verbunden sein und z.B. ein Gitter bilden.

Der Bewehrungsstab kann sich in einer Erstreckungsrichtung erstrecken. Die Erstreckungsrichtung ist sozusagen die Verlaufsrichtung des Bewehrungsstabes und muss nicht geradlinig sein. An gekrümmten Stellen des Bewehrungsstabes entspricht die Erstreckungsrichtung einer Tangenten, die an eine gekrümmte Mittelachse des Bewehrungsstabes bzw. an die Krümmung des Bewehrungsstabes angelegt wird.

Das Bewehrungselement bzw. der Bewehrungsstab weist einen oder mehrere Verstärkungsfäden auf. Der wenigstens eine Verstärkungsfaden erstreckt sich zumindest in den geradlinig verlaufenden Abschnitten des Bewehrungsstabes in Erstreckungsrichtung. Der wenigstens eine Verstärkungsfaden ist aus einem oder mehreren Filamenten gebildet und kann auch als Verstärkungsgarn bezeichnet werden. Als Filamente können Kunstfasern und/oder Naturfasern verwendet werden. Abhängig von der Anwendung können sämtliche auch bisher verwendete Filamente, wie Glasfasern unterschiedlicher Typen (z.B. AR-Glasfasern), Carbonfasern oder Basaltfasern eingesetzt werden.

Der wenigstens eine Verstärkungsfaden ist in einer Kunstoffmatrix des Bewehrungsstabes angeordnet. Mehrere Verstärkungsfäden können zur Bildung eines Bewehrungsgitters unter Bildung von Kreuzungsstellen angeordnet und in dieser Lage in die Kunststoffmatrix eingebettet sein. Die Verstärkungsfäden können daher ein Textilgitter bilden, das als Gewebe und/oder Gelege und/oder Gewirk ausgeführt sein kann. Ein solches Textilgitter kann zur Herstellung des Bewehrungselements in seiner Gitterform in die Kunststoffmatrix eingebettet werden, beispielsweise in einem Tränkbadprozess mit Kunststoff getränkt werden oder in eine Form eingelegt werden, in die anschließend der Kunststoff eingebracht wird.

Die Kunstoffmatrix des Verbundwerkstoffmaterials des Bewehrungselements besteht aus einem reversibel quervernetzten Kunststoff. Der Kunststoff weist mehrere Komponenten auf, von denen mindestens eine ein Polymer ist. Die Quervernetzung zwischen den Molekül- bzw. Polymerketten ist durch Zufuhr von Energie, insbesondere thermische Energie, auftrennbar. Wenn von der Auftrennbarkeit der Quervernetzungen die Rede ist, ist darunter zu verstehen, dass die Quervernetzungen der Molekülketten an der Stelle, an der die Energie zugeführt wird, nicht notwendigerweise vollständig, aber zum überwiegenden Teil durch die Energiezufuhr aufgetrennt werden. Somit sind durch die Energiezufuhr zumindest 50% oder zumindest 70% oder zumindest 90% der hergestellten Quervernetzungen auftrennbar. Die Verarbeitbarkeit in diesem Zustand entspricht in etwa der eines Thermoplasts.

Eine solche Kunststoffmatrix bzw. der für die Kunststoffmatrix verwendete Kunststoff kann durch das Auftrennen der Quervernetzungen durch Zufuhr von Energie umgeformt, insbesondere gebogen werden. Das Auftrennen der Quervernetzungen kann lokal an der entsprechenden Umform- bzw. Biegestelle erfolgen. Durch das Auftrennen der Quervernetzungen können die Molekül- bzw. Polymerketten relativ zueinander gleiten, was zur Umformbarkeit des Kunststoffes führt. Dadurch ist es möglich, einen hergestellten geraden Bewehrungsstab an einer oder mehreren Stellen zu biegen und ihn in eine beliebige zwei- oder dreidimensionale Form umzuformen. Ferner ist es auch möglich, durch das lokale Auflösen der Quervernetzungen mehrere Bewehrungsstäbe z.B. gitterartig zu verbinden und ein Bewehrungselement herzustellen, beispielsweise in Form eines Bewehrungsgitters.

Das Bewehrungselement (z.B. Bewehrungsstab oder Bewehrungsgitter) kann bei der Herstellung zunächst vollständig ausgehärtet werden. Dabei liegt das Polymer in einem vernetzten Zustand vor und hat Materialeigenschaften wie ein Duromer. Beschränkte Lagerzeiten und zusätzlicher Aufwand durch Kühlung zur Vermeidung der Alterung entfallen. Dadurch, dass die Quervernetzungen reversibel auftrennbar und wieder herstellbar sind, lassen sich Standard-Bewehrungselemente herstellen und abhängig von der Anforderung entweder in der Fabrik oder auch vor Ort an die konkreten Erfordernisse anpassen, insbesondere in Verbindung mit anderen Bewehrungselementen bzw. Bewehrungsstäben oder durch Umformung. Die bisherigen Beschränkungen der Lagerfähigkeit von Prepregs oder der mangelnden Umformbarkeit von vollständig ausgehärteten duromeren Bewehrungselementen besteht nicht mehr. Zudem bietet der Kunststoff gute temperaturstabile Eigenschaften mit geringer Kriechneigung wie übliche Duroplaste.

Ein Bewehrungselement kann einfach dadurch hergestellt werden, dass ein oder mehrere Verstärkungsfäden bereitgestellt werden. Der wenigstens eine Verstärkungsfaden wird in die Kunststoffmatrix eingebracht. Beispielsweise kann der wenisgtens eine Verstärkungsfaden in einem Bad aus flüssigem Kunststoff getränkt werden. Anschließend wird die Kunststoffmatrix ausgehärtet. Hierzu werden der oder die in dem noch nicht ausgehärteten Kunststoff aufgenommenen Verstärkungsfäden in einer Form angeordnet, so dass das Bewehrungselement bzw. der Bewehrungsstab die gewünschte Form erhält. In dieser Form wird die Kunststoffmatrix ausgehärtet. Es ist alternativ zum Tränken des wenigstens einen Verstärkungsfadens vor dem Einlegen in die Form auch möglich, den wenigstens einen Verstärkungsfaden in der Form anzuordnen, den flüssigen Kunststoff der Kunststoffmatrix in die Form einzubringen, beispielsweise einzuspritzen, und dann die Kunststoffmatrix in der Form auszuhärten.

In beiden Fällen ist es vorteilhaft, wenn der wenigstens eine Verstärkungsfaden vor dem Aushärten des Kunststoffes der Kunststoffmatrix mit einer Zugspannung vorgespannt wird. Dadurch ist sichergestellt, dass der wenigstens eine Verstärkungsfaden vollständig gestreckt im Bewehrungsstab des Bewehrungselements angeordnet ist. Dies stellt sicher, dass die Zugfestigkeit bzw. Zugsteifigkeit des hergestellten Bewehrungselements optimal ist. Vorzugsweise wird ein als Bewehrungsstab ausgeführtes Bewehrungselement als geradliniger Stab ohne Biegestelle in der Form hergestellt. Die Querschnittskontur eines solchen Stabes ist beliebig wählbar. Beispielsweise kann der Stab einen kreisrunden Querschnitt haben.

Es ist bevorzugt, wenn der Kunststoff der Kunststoffmatrix bei Raumtemperatur quervernetzt ist. Der Kunststoff kann mit oder ohne Zugabe eines Vernetzungsmittels selbstvernetzend sein. Im vollständig ausgehärteten Zustand bildet der Kunststoff einen duroplastähnlichen Kunststoff bzw. hat duroplastische Eigenschaften. Durch Energiezufuhr und Auflösen der Quervernetzungen in einem Temperaturbereich deutlich oberhalb des Gebrauchstemperaturbereichs und oberhalb des Glastemperaturbereichs wird der duroplastische Kunststoff thermoplastisch und kann umgeformt werden. Die Energie zur Auflösung der Quervernetzungen kann durch eine Strahlung, beispielsweise eine Wärmestrahlung und/oder UV-Strahlung und/oder eine andere elektromagnetische Strahlung eingebracht werden. Die Energie kann zusätzlich oder alternativ auch durch thermische Konvektion und/oder Wärmeleitung und/oder Ultraschall eingebracht werden.

Der Kunststoff der Kunststoffmatrix hat vorzugsweise eine Glasübergangstemperatur von mindestens 50°C oder mindestens 80°C oder mindestens 90°C oder mindestens 100° C. Zusätzlich oder alternativ hat der Kunststoff der Kunststoffmatrix insbesondere eine Glasübergangstemperatur von höchstens 130°C oder höchstens 140°C oder höchstens 150°C. Dadurch kann ein ausreichend großer Einsatzbereich der Kunststoffmatrix erreicht werden. Außerdem ist es möglich, die erforderliche Energiezufuhr zum Auflösen der Quervernetzungen gering zu halten.

Vorzugsweise ist der reversible quervernetzte Kunststoff mittels einer Diels-Alder-Reaktion vernetzbar und mittels einer Retro-Diels-Alder-Reaktion auftrennbar.

Der Kunststoff kann eine erste Komponente mit mindestens zwei dienophilen Doppelbindungen und eine zweite Komponente mit mindestens zwei Dien-Funktionalitäten aufweisen. Die erste Komponente und/oder die zweite Komponente können dabei mehr als zwei Funktionalitäten aufweisen.

Vorzugsweise ist die erste Komponente und/oder die zweite Komponente ein Polymer, beispielsweise ein Polyacrylat, ein Polymethacrylat, ein Polystyrol, ein Copolymer aus einem oder mehreren der vorgenannten Polymere, ein Polyacrylnitril, ein Polyether, ein Polyester, ein Polyamid, ein Polyesteramid, ein Polyurethan, ein Polycarbonat, ein amorphes und teilkristallines Poly-α-Olefin, ein Ethylen-Propylen-Dien-Kautschuk (EPDM), Ethylen-Propylen-Kautschuk (EPM), ein Polybutadiene, Acrylnitril-Butadien-Styrol (ABS), Styrol-Butadien-Kautschuk (SBR), ein Polysiloxan und/oder ein Block- und/oder Kamm- und/oder Sterncopolymer von einem oder mehren dieser Polymere.

Der Kunststoff der Kunststoffmatrix ist im Wesentlichen inert gegenüber Wasser, alkalischen Substanzen und ist daher sowohl selbst unempfindlich gegenüber diesen Substanzen als auch möglichst diffusionsdicht um die eingebetteten Fasern vor solchen Substanzen möglichst gut zu schützen.

Die erste Komponente kann eine dienophile Komponente mit zwei dienophilen Gruppen, ein Isocyanat oder Amin mit wenigstens zwei funktionellen Gruppen pro Molekül sein. Dabei kann es sich um ein Amin, ein Diamin, eine Komponente mit einer Kohlenstoff-Schwefel-Doppelbindung und einer Elektronen aufnehmenden Gruppe, einen trifunktionalen Dithioester-Verbinder, ein difunktionales Polymer aus einer Polymerisation (ATRP), ein Isocyanurat und vorzugsweise ein Isocyanat handeln. Weiter vorzugsweise kann das Isocyanat ein Diisocyanat, wie etwa ein 2,2,4-Trimethyl-1,6-Hexamethylen-Diisocyanat (TMDI) und/oder ein 3-Isocyanotomethyl-3,5,5-Trimethylzyklohexyl-Isocyanat (Isophoron-Diisocyanat, IPDI) sein.

Als zweite Komponenten mit wenigstens zwei Dienfunktionalitätiten können Diene mit Alkohol- oder Aminfunktionalität, wie etwa mehrwertige Alkohole und/oder polyfunktionale Polyamine verwendet werden. Insbesondere kann es sich um Sorbinalkohol und/oder Sorbinsäure handeln. Vorzugsweise ist das Dienophil ein Dithioester. Es ist auch möglich, Polymere, die durch Polymerisation (ATPR) erhalten wurden und mit konjugierten Diengruppen funktionalisiert sind, als zweite Komponente zu verwenden, wie zyklopentadienylterminiertes Poly-(Methyl)-Methakrylat (PMMA-Cp₂).

Beispiele verschiedener Kunststoffe, die als Kunststoffmatrix verwendet werden können, sind auch in DE 10 2010 001 987 A1 angegeben.

Das Bewehrungselement kann mehrere miteinander verbundene Bewehrungsstäbe aufweisen. An den Verbindungsstellen sind diese Bewehrungsstäbe vorzugsweise ausschließlich mittels des Kunststoffes der Kunststoffmatrix miteinander verbunden. Zur Herstellung der Verbindung kann an der Verbindungsstelle wenigstens einem der Bewehrungsstäbe Energie zugeführt werden, so dass sich die Quervernetzung auflöst und durch Kontakt oder Druck gegen den jeweils anderen Bewehrungsstab und anschließendes Aushärten eine stoffschlüssige Verbindung entsteht. Zusätzliche Verbindungs- oder Klebemittel sind nicht erforderlich. Die Energie kann durch Wärme und/oder UV-Strahlung und/oder Ultraschallanregung an der Verbindungsstelle eingetragen werden.

Auf diese Weise können zwei oder mehr Bewehrungsstäbe des Bewehrungselements miteinander verbunden werden. An jeder Verbindungsstelle kann durch Energieeintrag (insbesondere Erwärmen bzw. Aufschmelzen des Kunststoffes) zunächst eine zumindest teilweise Auflösung der Quervernetzungen bei vorzugsweise allen an der Verbindungsstelle zu verbindenden Bewehrungsstäben erreicht werden. Nach dem Beenden der Energiezufuhr bilden sich erneut Quervernetzungen an der jeweiligen Verbindungsstelle, wobei kovalente Bindungen im gesamten Gefüge an der Verbindungsstelle entstehen. Die Verbindungsstelle wird sehr stabil und weist eine lediglich geringe Kriechneigung auf. Diese geringe Kriechneigung ist für das Betonbauteil, das das Bewehrungselement enthält, besonders vorteilhaft, weil Bauteilverformungen aufgrund von Rissbildung im Beton deutlich kleiner ausfallen als bei anderen bewehrten Betonbauteilen.

Die Energiezufuhr kann an Verbindungsstellen gezielt erfolgen, beispielsweise auch separat. Dadurch lassen sich z.B. die Bewehrungsstäbe oder sonstige Bewehrungsteile des Bewehrungselements an der Verbindungsstelle gezielt verbinden, beispielsweise maschinell mittels eines Roboters, eines Greifarms, eines sonstigen Manipulators oder auch manuell durch eine Person. Alternativ kann die Energiezufuhr zu den Bewehrungsstäben oder sonstigen zu verbindenden Bewehrungsteilen auch an mehreren Verbindungsstellen gleichzeitig oder in einem eine oder mehrere Verbindungsstellen aufweisenden Bereich oder in den gesamten Bewehrungsteil erfolgen. Dadurch lassen sich einzelne Bewehrungsteile an mehreren Verbindungsstellen sehr schnell und einfach verbinden, beispielsweise zur einfachen Herstellung eines Bewehrungsgitters oder eines Bewehrungskorbes.

Ein Bewehrungsstab des Bewehrungselements erstreckt sich in wenigstens einem Stababschnitt oder über seine gesamte Länge geradlinig. Die Verstärkungsfäden entlang des sich geradlinig erstreckenden Abschnitts oder entlang der gesamten Länge des Bewehrungsstabs sind unter Zugspannung in der Kunststoffmatrix angeordnet bzw. gehalten. Dadurch wird die Zugfestigkeit bzw. Zugsteifigkeit des Bewehrungselements optimiert.

Wenigstens einer der der Bewehrungsstäbe des Bewehrungselements kann eine Biegestelle aufweisen. Wie erläutert, sind die Verstärkungsfäden zumindest außerhalb dieser Biegestelle unter Zugspannung in der Kunststoffmatrix gehalten. Diese Zugspannung wird auch nicht durch das lokale Auflösen der Quervernetzungen zur Erzeugung der Biegestelle aufgehoben, sondern bleibt erhalten.

An der Biegestelle können sich zumindest einige der Verstärkungsfäden schräg zu der Erstreckungsrichtung erstrecken und sich dabei insbesondere der Mittelachse des zumindest einen Bewehrungsstabes annähern. An der Biegestelle kann eine Biegungsinnenseite eine Innenkrümmung und eine der Biegungsinnenseite bezogen auf die Mittelachse des Bewehrungsstabes entgegengesetzte Biegungsaußenseite eine Außenkrümmung aufweisen. Die Innenkrümmung ist betragsmäßig größer als die Außenkrümmung. Es ist insbesondere bevorzugt, wenn ein möglichst großer Anteil der Verstärkungsfäden an der Biegestelle eine Krümmung aufweist, dessen Betrag dem der Krümmung der Mittelachse des Bewehrungsstabes entspricht. Eine Wellenbildung eines Verstärkungsfadens liegt nicht vor. Die im Bereich der Innenkrümmung verlaufenden gestauchten Verstärkungsfäden werden an der Biegestelle in das Innere des Bewehrungsstabes von der Biegungsinnenseite weg bewegt, wenn der Bewehrungsstab gebogen wird. Dadurch kann eine Wellenbildung durch die zu große Länge der im Bereich der Biegungsinnenseite verlaufenden Verstärkungsfäden vermieden und die Zugsteifigkeit bzw. der Zugfestigkeit des Bewehrungsstabes verbessert werden.

Das Bewehrungselement kann außerdem eine raue bzw. unebene Außenfläche aufweisen. Dadurch kann der Verbund mit der Betonmatrix des Betonbauteils - oder einem anderen gegossenen Bauelement mit einer Matrix aus einem mineralischen Bauwerkstoff - verbessert werden. Es ist dabei möglich, ein Rippenelement im Bereich der Außenfläche vorzusehen, das gegenüber der benachbarten Außenfläche von der Mittelachse des Bewehrungsstabes weg nach außen vorsteht. Als Rippenelement können eine oder mehrere mit dem Kunststoff der Kunststoffmatrix getränkte Verstärkungsfäden im Bereich der Außenfläche eines Bewehrungsstabes angeordnet werden und einen beispielsweise schraubenförmigen Vorsprung bilden. Dies kann während oder nach dem Herstellen eines Bewehrungsstabes durchgeführt werden.

Um einen geradlinigen Bewehrungsstab zu biegen, wird - vorzugsweise lokal an der Biegestelle - Energie eingebracht, um dort die Quervernetzung des Kunststoffes der Kunststoffmatrix aufzulösen. Die Energie kann beispielsweise in Form von Wärme und/oder UV-Strahlung und/oder einer anderen elektromagnetischen Strahlung und/oder Ultraschallanregung eingebracht werden. Anschließend kann der Bewehrungsstab gebogen und wieder ausgehärtet werden. Beim Aushärten stellt der Kunststoff der Kunststoffmatrix die Quervernetzung wieder her, zumindest zum überwiegenden Teil. Insbesondere werden zumindest 85% oder zumindest 90% oder zumindest 95% der aufgelösten Quervernetzungen wieder hergestellt.

Um das Biegeverfahren auszuführen, wird vorzugsweise eine Biegevorrichtung verwendet. Die Biegevorrichtung hat eine Energieeintragseinrichtung zum Eintragen der Energie an der Biegestelle, beispielsweise eine Heizeinrichtung und/oder Ultraschalleinrichtung. Die Wärme kann durch Wärmeleitung und/oder durch thermische Konvektion und/oder durch Wärmestrahlung eingetragen werden. Die Energieeintragseinrichtung kann dabei in Kontakt mit dem Bewehrungsstab stehen oder mit Abstand dazu angeordnet sein. Die Ultraschalleinrichtung kann die Quervernetzungen an der Biegestelle durch Ultraschallanregung zumindest teilweise auflösen.

Die Biegevorrichtung hat außerdem eine Werkzeuganordnung. An der Biegeinnenseite der Biegestelle ist ein erstes Werkzeugteil angeordnet, das dazu eingerichtet ist und dazu dient, den Bewehrungsstab während des Biegens an der Biegeinnenseite abzustützen. Das erste Werkzeugteil kann hierfür eine erste Angriffsfläche aufweisen, deren Krümmung der vorgegebenen, zu erreichenden Innenkrümmung des Bewehrungsstabes entspricht. Ausgehend von der Biegestelle ragt der zu biegende Bewehrungsstab mit einem ersten Stababschnitt in eine erste Richtung und mit einem zweiten Stababschnitt in eine zweite Richtung weg. Die beiden Richtungen sind bei einem noch zu biegenden geraden Bewehrungsstab entgegengesetzt orientiert.

Die Werkzeuganordnung hat eine Halteeinrichtung, die an dem ersten Stababschnitt angreift dazu dient, den Bewehrungsstab auf der einen Seite der Biegestelle abzustützen. Die Werkzeuganordnung hat außerdem ein Umformwerkzeug, das dazu eingerichtet ist, an dem zweiten Stababschnitt anzugreifen und die Biegebewegung relativ zu der Halteeinrichtung und relativ zu dem ersten Werkzeugteil auszuführen. Die Halteeinrichtung kann beim Durchführen der Biegebewegung durch das Umformwerkzeug stillstehen. Es ist auch möglich, sowohl die Halteinrichtung, als auch das Umformwerkzeug bewegbar auszuführen, so dass die Biegebewegung sowohl am ersten als auch am zweiten Stababschnitt durchgeführt wird.

Durch das Abstützen am ersten Werkzeugteil wird an der Biegeinnenseite die gewünschte Innenkrümmung erreicht. Außerdem kann das erste Werkzeugteil bevorzugt dazu eingerichtet sein, die Verstärkungsfäden im Bereich der Biegeinnenseite von der Biegeinnenseite weg in Richtung zur Mittelachse zu drücken, um eine Welligkeit dieser Verstärkungsfäden zu verhindern.

Die Werkzeuganordnung kann optional ein zweites Werkzeugteil aufweisen, das dazu eingerichtet ist, an der Biegestelle an der Biegeaußenseite des Bewehrungsstabes anzugreifen. Das zweite Werkzeugteil und das erste Werkzeugteil können den Bewehrungsstab an der Biegestelle rechtwinklig zur Biegeachse mit einer Kraft bzw. einem Druck beaufschlagen. Vorzugsweise sind das erste und/oder das zweite Werkzeugteil dazu eingerichtet, die Querschnittsform des Bewehrungsstabes an der Biegestelle vor oder beim Biegen gegenüber der ursprünglichen Querschnittsform des ersten Stababschnitts bzw. des zweiten Stababschnitts umzuformen. Insbesondere wird dabei die Querschnittsabmessung parallel zur Biegeachse größer, während die Querschnittsabmessung rechtwinklig zur Biegeachse und radial zur Krümmung reduziert wird. Der Bewehrungsstab erhält an der Biegestelle sozusagen eine seitliche Ausprägung. Diese Ausprägung ermöglicht das Verschieben der Verstärkungsfäden von der Biegeinnenseite und/oder der Biegeaußenseite näher zur Mittelachse des Bewehrungsstabes hin.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. Es zeigen:
Figur 1 eine Prinzipdarstellung eines Ausführungsbeispiels einer Vorrichtung und eines Verfahrens zur Herstellung eines Bewehrungsstabes,
Figur 2 einen Bewehrungsstab in schematischer geschnittener perspektivischer Ansicht,
Figur 3a eine stark vereinfachte Prinzipdarstellung einer Diels-Alder-Reaktion sowie einer Retro-Diels-Alder-Reaktion,
Figur 3b eine stark vereinfachte Prinzipdarstellung einer reversiblen Quervernetzung durch Lichteinstrahlung auf einen Kunststoff,
Figuren 4-7 eine blockschaltbildähnliche Darstellung eines Verfahrens sowie einer Vorrichtung zum Biegen eines Bewehrungsstabes,
Figur 8 eine schematische Darstellung eines gebogenen Bewehrungsstabes an der Biegestelle sowie dessen angrenzende geradlinige Stababschnitte,
Figur 9 einen Querschnitt durch die Biegestelle des Bewehrungsstabes gemäß der Schnittlinie IX-IX in Figur 8,
Figuren 10 und 11 ein Blockschaltbild eines Ausführungsbeispiels eines Verfahrens sowie einer Vorrichtung zur Herstellung eines Rippenelements im Bereich der Außenfläche eines Bewehrungsstabes,
Figuren 12 und 13 jeweils ein Blockschaltbild eines Ausführungsbeispiels eines Verfahrens sowie einer Vorrichtung zum Einbringen von Partikeln, beispielsweise Sand, in dem Kunststoff der Kunststoffmatrix eine Bewehrungsstabes,
Figuren 14-16 Blockschaltbilder eines Ausführungsbeispiels einer Vorrichtung sowie eines Verfahrens zur Herstellung eines Bewehrungselements aus mehreren Bewehrungsstäben,
Figuren 17-19 Prinzipdarstellungen eines Ausführungsbeispiels eines Verfahrens zum Umformen eines Bewehrungselements aus mehreren Bewehrungsstäben,
Figur 20 ein als Bewehrungsgitter ausgeführtes Bewehrungselement,
Figuren 21 und 22 Prinzipdarstellungen eines Ausführungsbeispiels einer Vorrichtung sowie eines Verfahrens zur Herstellung des Bewehrungsgitter aus Figur 20,
Figuren 23 und 24 Prinzipdarstellungen eines weiteren Ausführungsbeispiels eines Verfahrens zum Umformen eines Bewehrungsstabes,
Figuren 25 und 26 Prinzipdarstellungen eines weiteren Ausführungsbeispiels eines Verfahrens zum Verbinden zweier Bewehrungsstäbe,
Figur 27 eine schematische Prinzipdarstellung eines Betonbauteils in perspektivischer teilgeschnittener Darstellung und
Figuren 28 bis 30 jeweils eine schematische Darstellung in Draufsicht auf verschiedene beispielhafte Formen von Betonbauteilen.

Die Erfindung betrifft ein Betonbauteil 48 mit einer mineralischen Betonmatrix 49, in die ein Bewehrungselement 50 eingebettet ist. Die Betonmatrix 49 kann beispielsweise Zement und eine Gesteinskörnung und optional Betonzusatzstoffe bzw. Betonzusatzmittel aufweisen.

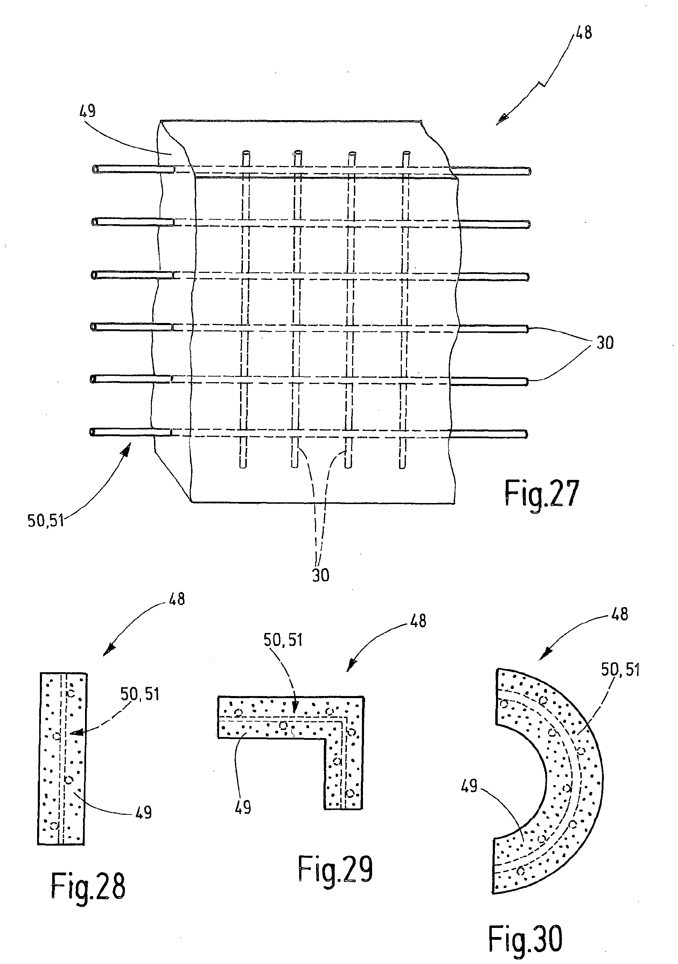

Das Betonbauteil 48 und das Bewehrungselement 50 können in verschiedenen Ausführungsformen realisiert werden. Die Figuren 27 bis 30 zeigen beispielhaft verschiedene Ausführungsformen des Betonbauteils 48. Es kann beispielsweise quaderförmig ausgeführt sein (Figuren 27 und 28). Es kann im Querschnitt oder in Draufsicht betrachtet auch einen oder mehrere gebogene Abschnitte aufweisen, z.B. im Querschnitt kreisbogenförmig sein (Figur 30). Das Ausführungsbeispiel gemäß Figur 29 ist im Querschnitt abgewinkelt und kann beispielsweise einen rechten Winkel bilden. Beliebige Kombinationen der dargestellten Ausführungsformen können auch bei einem einzigen integralen Betonbauteil 48 vorhanden sein, z.B. eine oder mehrere Ecken bzw. abgewinkelte Abschnitte und/oder ein oder mehrere gebogene Abschnitte.

Es hat wenigstens einen Bewehrungsteil 29, der sich in einer Erstreckungsrichtung S erstreckt. Wenn das Bewehrungselement 50 lediglich einen sich geradlinig erstreckenden Bewehrungsteil 29 aufweist, ist es als Bewehrungsstab 30 ausgeführt. Das Bewehrungselement 50 kann auch als Bewehrungsgitter 80 mit mehreren, Öffnungen 85 des Bewehrungsgitters 80 begrenzenden Bewehrungsteilen 29 ausgeführt sein. Eine Gitterform oder eine andere beliebige Form kann auch erhalten werden, wenn mehrere vorher hergestellte Bewehrungsstäbe 30 zu einem Bewehrungselement 50 miteinander verbunden werden.

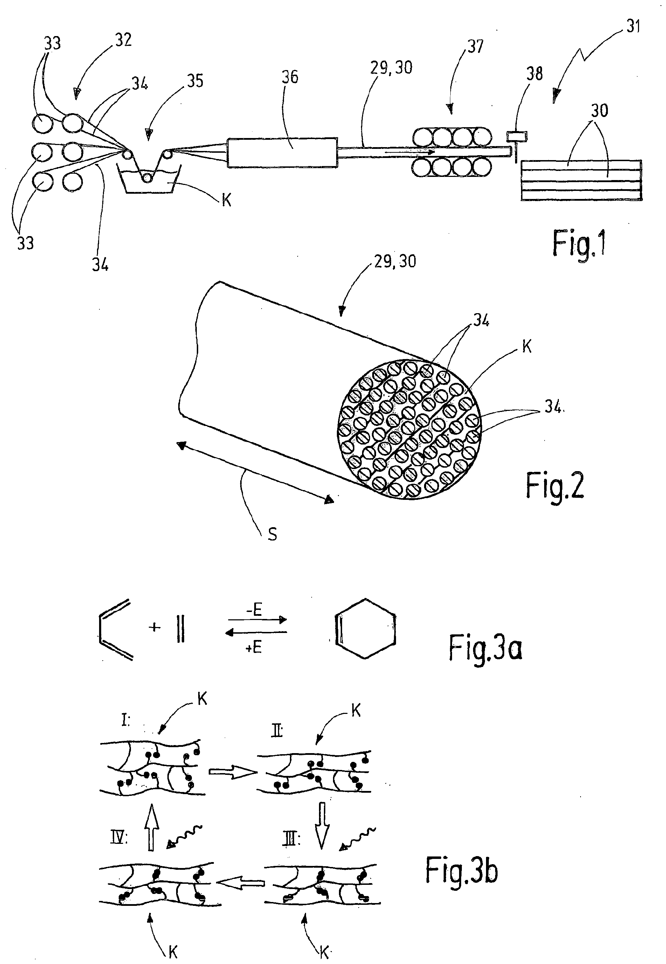

In Figur 1 ist schematisch und blockschaltbildähnlich ein Ausführungsbeispiel zur Herstellung eines Bewehrungsstabes 30 veranschaulicht. Die Herstellungsvorrichtung 31 führt beispielsweise einen Pultrusionsprozess durch. Sie weist ein Gatter 32 mit mehreren Spulen 33 auf. Auf den Spulen 33 ist jeweils ein Verstärkungsfaden 34 bzw. Verstärkungsgarn aufgewickelt und wird während des Herstellungsverfahrens von der Spule 33 abgewickelt. Bei dem beispielhaften Verfahren werden die Verstärkungsfäden 34 durch ein Bad 35 aus flüssigem Kunststoff K geführt und dadurch mit dem Kunststoff K getränkt. Der Kunststoff K haftet zumindest an der Außenfläche der Verstärkungsfäden 34. Im Anschluss daran werden die mit dem Kunststoff K versehenen Verstärkungsfäden 34 in eine Form 36 geführt und dort in der gewünschten Querschnittskontur teilweise oder vollständig ausgehärtet. Mittels einer Abzugseinrichtung 37, beispielsweise mittels angetriebenen Rollen oder Walzen, wird das ausgehärtete Bewehrungsstabprofil aus der Form 36 heraustransportiert und schließlich mittels eines Trennwerkzeugs 38 in einer gewünschten Länge durchtrennt. Dabei entstehen sich gerade erstreckende Bewehrungsstäbe 30. Die Bewehrungsstäbe 30 haben beim Ausführungsbeispiel eine kreisrunde Querschnittsgestalt (Figur 2). Auch beliebige andere Querschnittskonturen, beispielsweise elliptische, polygonale oder auch beliebig gekrümmte und/oder mit Ecken versehenen Querschnittsformen sind herstellbar. Über die Form 36 kann die Querschnittsgestalt des Bewehrungsstabes 30 definiert werden.

Der Bewehrungsstab 30 erstreckt sich in eine Erstreckungsrichtung S. Beim bevorzugten Ausführungsbeispiel werden die Bewehrungsstäbe 30 als sich geradlinig erstreckende Bewehrungsstäbe hergestellt. Die Verstärkungsfäden 34, die durch Aushärten des Kunststoffes K in eine aus dem Kunststoff K bestehende Kunststoffmatrix eingebunden sind, werden vorzugsweise während des Aushärtens des Kunststoffes K unter Zugspannung gehalten, so dass sie im Bewehrungsstab 30 unter Zugspannung in die Kunststoffmatrix aus dem Kunststoff K eingebunden sind. Dies vermeidet wellenförmige oder geknickte Verstärkungsfäden 34 im Bewehrungsstab 30 und erhöht dessen Zugfestigkeit bzw. Zugsteifigkeit.

Die Zugspannung bzw. Streckung des wenigstens einen Verstärkungsfadens 34 kann durch die Verwendung eines Pultrusionsprozesses zur Herstellung des Bewehrungselements 50 uns beispielsweise des Bewehrungsstabes 30 erreicht werden ohne dass besondere zusätzliche Maßnahmen zur Spannung der Verstärkungsfäden 34 erforderlich sind.

In Abwandlung zu dem in Figur 1 veranschaulichten Ausführungsbeispiel kann der flüssige Kunststoff K auch innerhalb der Form 36 auf die Verstärkungsfäden 34 aufgebracht werden.

Der Kunststoff K der Kunststoffmatrix weist quervernetzte Molekülketten, insbesondere Polymerketten auf. Die Quervernetzungen entstehen unterhalb der entsprechenden Glasübergangstemperatur von z.B. 50°C, 80°C, 100°C, 130°C oder 150°C. Die Quervernetzungen stellen sich ohne Zugabe eines besonderen Vernetzungsmittels selbstständig her. Der Kunststoff K kann daher als selbstvernetzend bezeichnet werden. Bei hergestellten Quervernetzungen ist der Kunststoff K in seinen wesentlichen Eigenschaften duroplastisch.

Durch Energieeintrag in den Kunststoff K der Kunststoffmatrix mit Hilfe einer Energieeintragseinrichtung 43 können die Quervernetzungen aufgelöst werden. Darunter ist zu verstehen, dass zumindest ein Teil der Quervernetzungen und insbesondere wenigstens 50% auflösbar sind, um den Bewehrungsstab 30 an der Stelle, an der die Quervernetzungen aufgelöst wurden, umformen zu können. Vorzugsweise sind die Quervernetzungen an der Stelle, an der die Energie eingebracht wurde, zu wenigstens 80% oder zu wenigstens 90% auflösbar. Zum Auflösen der Quervernetzungen wird beispielsgemäß thermische Energie eingebracht, beispielsweise mittels einer als Heizeinrichtung 44 ausgeführten Energieeintragseinrichtung 43. Mit Hilfe der Heizeinrichtung 44 kann Wärme durch Wärmestrahlung und/oder Wärmekonvektion und/oder Wärmeleitung lokal an eine Umformstelle bzw. Biegestelle 45 (Figuren 1-8) eingebracht werden. Dadurch wird die Quervernetzung des Kunststoffes K an der Biegestelle aufgelöst, so dass sich der Bewehrungsstab 30 umformen und beispielsweise biegen lässt.

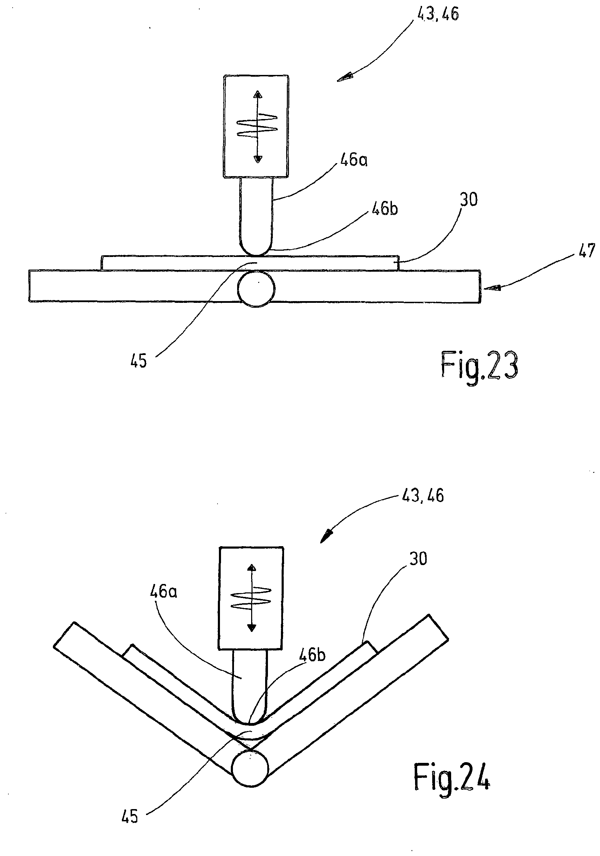

In den Figuren 23 und 24 ist eine Energieeintragseinrichtung 43 in Form einer Ultraschalleinrichtung schematisch veranschaulicht. Die Ultraschalleinrichtung 46 hat eine Anregungseinheit zur Ultraschallanregung, die mit einer Sonotrode 46a verbunden ist. An dem der Anregungseinheit entgegengesetzten Ende weist die Sonotrode 46a ein Formwerkzeugende 46b auf. Das Formwerkzeugende 46b kann beispielsweise eine konvex gekrümmte Formwerkzeugfläche entsprechend einem herzustellenden Innenkrümmungsradius an einem Bewährungsstab 30 aufweisen.

Gegenüberliegend zu dem Formwerkzeugende 46b ist ein Gegenhaltewerkzeug 47 angeordnet, das beispielsweise zwei an einer Knick- oder Schwenkstelle schwenkbar aneinander gelagerte Schenkel aufweist. Ein zu biegender Bewehrungsstab 30 liegt an seiner Biegestelle zwischen dem Formwerkzeugende 46b und dem Gegenhaltewerkzeug 47 auf dem Gegenhaltewerkzeug 47 auf. Über die Ultraschalleinrichtung 46 wird Energie in Form von Ultraschallschwingungen an der Biegestelle 45 bzw. im Bereich der Biegestelle 45 in den Bewehrungsstab 30 eingetragen, so dass sich die Quervernetzungen zumindest teilweise auflösen und eine Biegbarkeit erreicht ist. Anschließend kann durch eine Relativbewegung zwischen dem Gegenhaltewerkzeug 47 und dem Formwerkzeugende 46a ein Biegen des Bewehrungsstabes 30 an der Biegestelle 45 durchgeführt werden, wie es schematisch in Figur 24 gezeigt ist. Dabei Knicken die beiden Schenkel des Gegenhaltewerkzeugs 47 entsprechend dem gewünschten Biegewinkel zueinander ab und biegen den Bewehrungsstab 30 sozusagen um das Formwerkzeugende 46b.

Mittels der Ultraschalleinrichtung 46 kann beispielsweise auch eine Verbindung zwischen zwei Bewehrungsstäben 30 an einer Verbindungsstelle hergestellt werden. An der Stelle, an der ein Bewehrungsstab 30 mit einem anderen Bewehrungsstab 30 verbunden werden soll, kann über die Ultraschalleinrichtung 46 Energie eingetragen und die Quervernetzungen des Kunststoffes K zumindest teilweise aufgelöst werden. Dieser Energieantrag kann an einem oder beiden zu verbindenden Bewehrungsstäben erfolgen. Anschließend werden die zu verbindenden Bewehrungsstäbe 30 an der Verbindungsstelle miteinander in Kontakt gebracht und gegebenenfalls gegeneinander gedrückt. Anschließend wird der Kunststoff K an der Verbindungsstelle (beispielsweise an Luft) wieder ausgehärtet, indem er abkühlt. Dabei stellen sich die Quervernetzungen zumindest teilweise wieder her und es entstehend im gesamten Gefüge an der Verbindungsstelle kovalente Bindungen zwischen den Kunststoffen K der aneinander anliegenden Bewehrungsstäbe 30. Dadurch kann eine stabile Verbindung mit sehr geringer Kriechneigung erreicht werden.

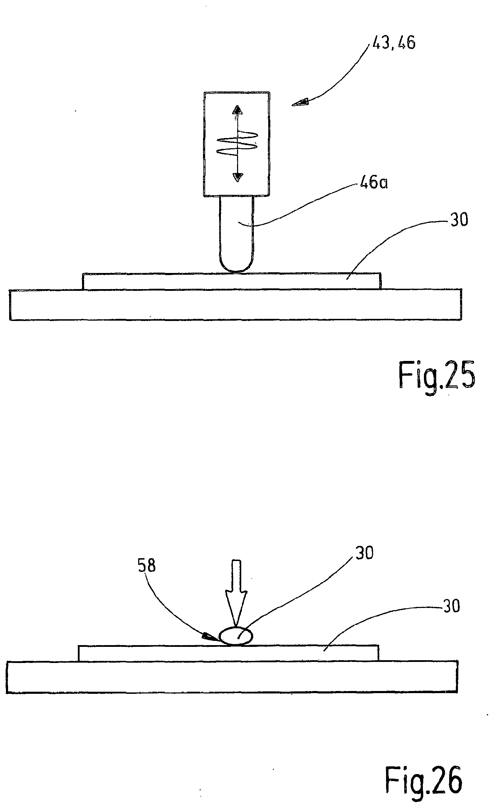

Die geringe Kriechneigung ist vorteilhaft für das Betonbauteil 48. Wenn ein Bewehrungselement 50, wie etwa das in Figur 25 gezeigte Bewehrungsgitter 51, aus mehreren Bewehrungsstäben 30 bzw. anderen einzelnen Bewehrungselementen hergestellt ist, entstehen aufgrund der geringen Kriechneigung des Bewehrungselements 50 kleinere Rissbreiten im Betonbauteil 48. Der Kunststoff K ist unempfindlich gegen Wasser und mineralische Bestandteile der Betonmatrix 49 und eignet sich deswegen besonders gut für das bewehrte Betonbauteil 48. Gegenüber stahlbewehrten Betonbauteilen ist das erfindungsgemäße Betonbauteil 48 wesentlich leichter. Die Last auf untere Wände oder Wandabschnitte eines Bauwerks kann bei sehr guter Stabilität verringert werden. Die Abschirmung von elektromagnetischen Strahlungen eines solchen Betonbauteils 48 ist im Vergleich zu stahlbewehrten Betonbauteilen geringer, was bei der Erstellung von Innenwänden vorteilhaft sein kann, wenn beispielsweise drahtlose Funkverbindungen (z.B. WLAN-Verbindung) in einem Gebäude hergestellt werden soll.

Der Kunststoff K hat beispielsgemäß eine Glasübergangstemperatur von mindestens 80°C bis 90°C und vorzugsweise über 100°C. Durch Erwärmen des Kunststoffes K über die Glasübergangstemperatur lösen sich die Quervernetzungen auf und der Kunststoff K hat an der Stelle mit aufgelösten Quervernetzungen eine thermoplastische Eigenschaft und ist mithin verformbar. Die Molekülketten und insbesondere die Polymerketten können gegeneinander verschoben werden, was die Verformbarkeit ermöglicht.

Durch erneutes Abkühlen härtet der Kunststoff K nach dem Umformen bzw. Biegen wieder aus. Die Quervernetzung stellt sich zumindest zum überwiegenden Teil und beispielsweise zumindest zu 90% oder 95% wieder her. Dabei gehen die thermoplastischen Eigenschaften verloren und der Kunststoff K erhält wieder seine duroplastischen Eigenschaften, die er unterhalb der Verglasungstemperatur aufweist.

Vorzugsweise wird als Kunststoff K ein Kunststoffmaterial verwendet, das mittels einer Diels-Alder-Reaktion quer-vernetzbar und dessen Quervernetzung mittels einer Retro-Diels-Alder-Reaktion auftrennbar ist. Die Diels-Alder-Reaktion bzw. die Retro-Diels-Alder-Reaktion ist in Figur 3 schematisch veranschaulicht. Mit dem Buchstaben "E" ist in Figur 3a angedeutet, dass zum Auftrennen der Quervernetzung eine Energiezufuhr notwendig ist (Symbol "+E"), während durch Abkühlen Energie in Form von Wärme aus dem Kunststoff K frei wird (Symbol "-E") und sich die Quervernetzungen wieder herstellen.

Figur 3b zeigt eine weitere Möglichkeit zur reversiblen Quervernetzung. Als Kunststoff K kann ein mittels Licht, z.B. UV-Strahlung, reversibel quervernetzbarer Kunststoff K verwendet werden. Im Ausgangszustand (Zustand I in Fig. 3b) bei Raumtemperatur hat der Kunststoff K thermoplastische Eigenschaften und kann verformt werden. In dem Zustand II der Figur 3b ist der Kunststoff K in die gewünschte Form gebracht und steht daher unter einer Zug- und/oder Druckspannung. In diesem Zustand kann er mit Licht einer ersten Wellenlänge λ1 bestrahlt werden, wodurch sich die bislang nicht verbundenen Querverbindungen vernetzen (Zustand III in Figur 3b). Dadurch erhält der Kunststoff K duroplastische Eigenschaften und behält seine Form, auch wenn äußere Kräfte nicht mehr auf das Material einwirken (Zustand IV in Figur 3b). Wenn die reversiblen Quervernetzungen wieder aufgelöst werden sollen, kann der Kunststoff K mit Licht einer zweiten Wellenlänge A2 bestrahlt werden, wodurch er wieder in seinen Ausgangszustand mit thermoplastischen Eigenschaften übergeht, da sich die Quervernetzungen zumindest teilweise auflösen (Übergang von Zustand IV zurück zum Zustand I). Dieser Prozess kann mehrfach durchlaufen werden.

Photoreaktive Kunststoffe, die eine reversible Quervernetzung ermöglichen, enthalten beispielsweise Kumarin-Derivate, Zimtsäure, Cinnamate und Stilbene (C₁₄H₁₂). Zum Beispiel kann eine erste Wellenlänge λ1 oberhalb von 260 nm die Doppelbindung von Zimtsäure mit benachbarten Zinnsäuremolekülen dimerisieren, wodurch sich ein Cyklobutan bildet. Die gebildeten Cyklobutanringe können durch UV-Licht mit einer zweiten Wellenlänge A2 von kleiner 260 nm aufgetrennt werden.

Photoreaktive Kunststoffe weisen zwei Komponenten auf: molekulare photochrome Gruppen, die als Schalter wirken, und permanente Netzstrukturen. Die photochromen Schalter erzeugen photoreversible kovalente Quervernetzungen, die unter Lichteinfluss abhängig von der Wellenlängen gebildet oder aufgetrennt werden. Die permanenten Netzstrukturen sind quervernetzte Polymere oder sich durchdringende Polymernetze. Geeignete Polymeresind Ethylenglycol-1-Acrylat-2-Zimtsäure und vierarmiges Stern-Polyethylenglycol mit Cinnamyllidenessigsäure und Copolymere von n-ButylAcrylat oder Butylacrylat mit Hydroxylethylmethacrylat.

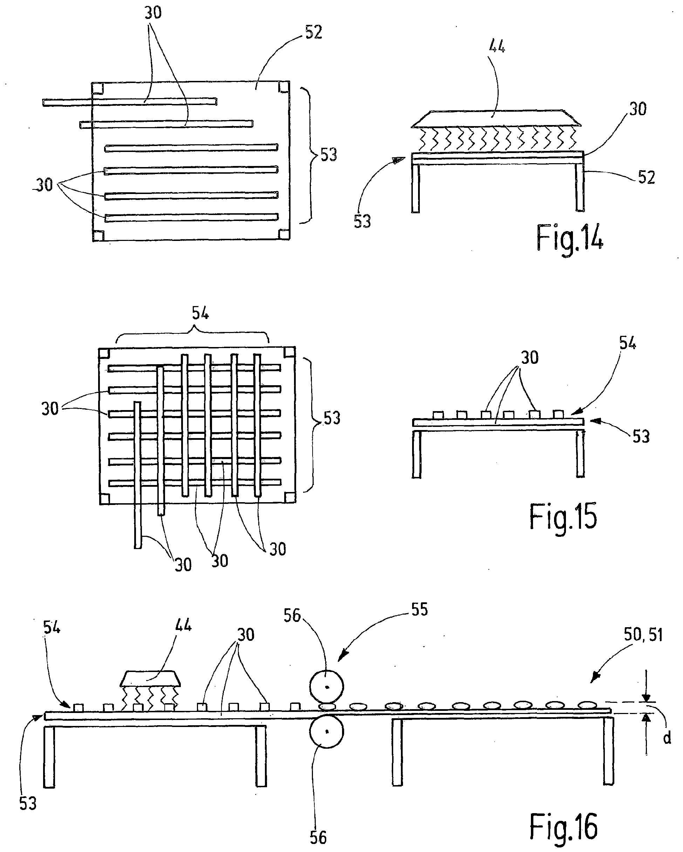

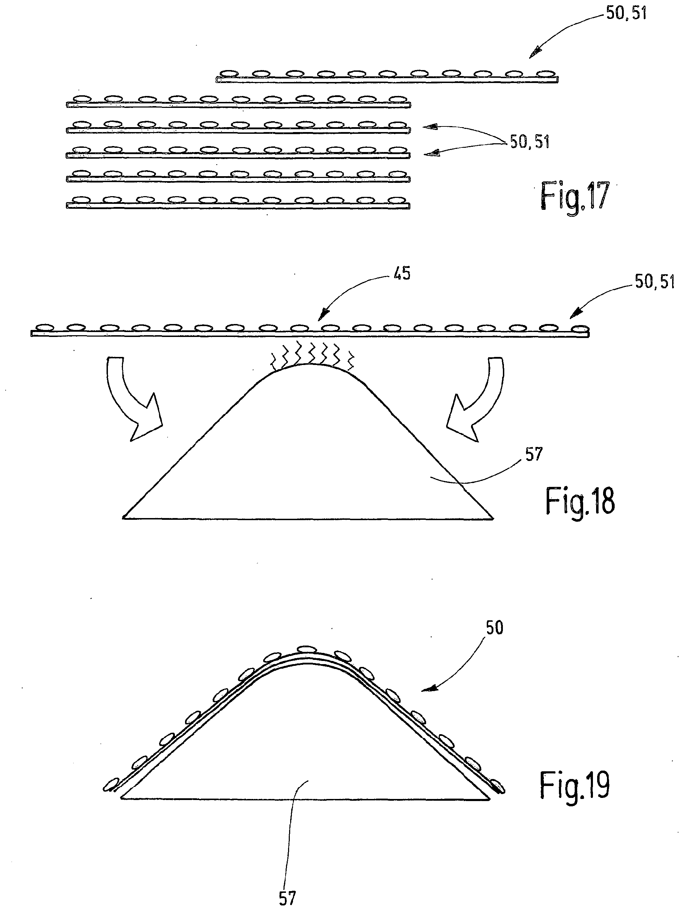

Mittels eines oder mehrerer der beschriebenen Bewehrungsstäbe 30 kann ein Bewehrungselement 50 hergestellt werden. Im einfachsten Fall ist das Bewehrungselement 50 durch einen einzigen Bewehrungsstab 30 gebildet. Wie es anhand der Figuren 14-19 veranschaulicht ist, können auch mehrere hergestellte Bewehrungsstäbe 30 dazu verwendet werden, daraus ein Bewehrungselement 50 herzustellen. Beispielhaft ist ein Bewehrungselement 50 mit einer Gitterstruktur aus sich kreuzenden Bewehrungsstäben veranschaulicht. Es lassen sich auch andere beliebige Bewehrungselemente 50 mit sich geradlinig erstreckenden und/oder eine oder mehrere Biegestellen 45 aufweisenden Bewehrungsstäben 30 herstellen. Beispielsweise kann ein Bewehrungselement 50 auch mehrere geradlinig verlaufende Bewehrungsstäbe 30 aufweisen, zwischen denen ein weiterer Bewehrungsstab zickzackförmig bzw. wellenförmig angeordnet ist. Ein Bewehrungselement 50 kann sich hauptsächlich in einer Ebene erstrecken und mithin eine im Wesentlichen zweidimensionale Form aufweisen, wie es beispielhaft anhand der Gitterstruktur veranschaulicht ist. Ein solches Gitter oder eine andere zweidimensionale Struktur kann auch in eine dreidimensionale Form gebracht werden, wie es beispielhaft anhand der Figuren 17-19 veranschaulicht ist.

Zur Herstellung eines Bewehrungselements 50 und beispielsgemäß eines Bewehrungsgitters 51 werden zunächst mehrere Bewehrungsstäbe 30 parallel zueinander auf einem Träger 52 angeordnet und mit Hilfe einer Heizeinrichtung 44 erwärmt, so dass die Quervernetzungen aufgelöst werden (Figur 14). Diese Bewehrungsstäbe 30 bilden eine erste Lage 53 von Bewehrungsstäben 30. Auf diese erste Lage 53 von Bewehrungsstäben 30 wird eine weitere, zweite Lage 54 von Bewehrungsstäben 30 aufgelegt (Figur 15). Anschließend werden die beiden Lagen 53, 54 gegeneinander gepresst bzw. gegeneinander gedrückt. Hierfür kann eine Andrückanordnung 55 verwendet werden. Durch das Aneinanderdrücken der Bewehrungsstäbe 30 kann sich auch deren Querschnittskontur verändern. Die Andrückanordnung 55 kann außerdem dafür verwendet werden, eine gewünschte Dicke d des Bewehrungsgitters 51 bzw. des Bewehrungselements 50 einzustellen.

Die Andrückanordnung 55 kann beispielsweise zwei rotierende Walzen 56 aufweisen, die mit Abstand zueinander angeordnet sind. Die beiden Lagen 53, 54 können durch den Spalt zwischen des Walzen 56 transportiert und dabei aneinander angedrückt werden. Der Abstand zwischen den Mantelflächen der beiden Walzen 56 wird so eingestellt, dass nach dem Aneinanderdrücken der Bewehrungsstäbe 30 die gewünschte Dicke d des Bewehrungselements 50 erhalten wird. Vor dem Aneinanderdrücken mittels der Andrückanordnung 55 können die beiden Lagen 53, 54 der Bewehrungsstäbe 30 mittels einer Heizeinrichtung 44 nochmals erwärmt werden. Dadurch lassen sich auch die Quervernetzungen an den Bewehrungsstäben 30 der zweiten Lage 54 auflösen, wodurch die Verbindung der aneinander anliegenden Bewehrungsstäbe 30 der beiden Lagen 53, 54 verbessert wird.

Wie es vorstehend bereits erklärt wurde, könnte der Energieeintrag anstelle von Wärme auch anders erfolgen, beispielsweise durch eine Ultraschallanregung (Figur 25). Der Energieeintrag kann entlang eines Bereichs der Bewehrungsstäbe 30 und somit an mehreren oder allen Verbindungsstellen 58 gleichzeitig (z.B. durch Wärme der Heizeinrichtung 44) erfolgen. Es ist auch möglich, die Energie beispielsweise mithilfe eines Manipulators oder manuell an einer oder mehreren Verbindungsstellen 58 punktuell bzw. lokal einzubringen (z.B. durch Ultraschallanregung oder Wärme) .

Die Verbindung der Bewehrungsstäbe 30 an den Kreuzungs- bzw. Verbindungsstellen 58 wird ausschließlich durch den Kunststoff K der Kunststoffmatrix erreicht. Zusätzliche Klebemittel oder mechanische Verbindungsmittel sind nicht vorgesehen. Beim Abkühlen und Wiederherstellen der Quervernetzungen verbinden sich die Kunststoffe K der aneinander anliegenden Bewehrungsstäbe 30 und bilden ein stabiles Bewehrungselement 50.

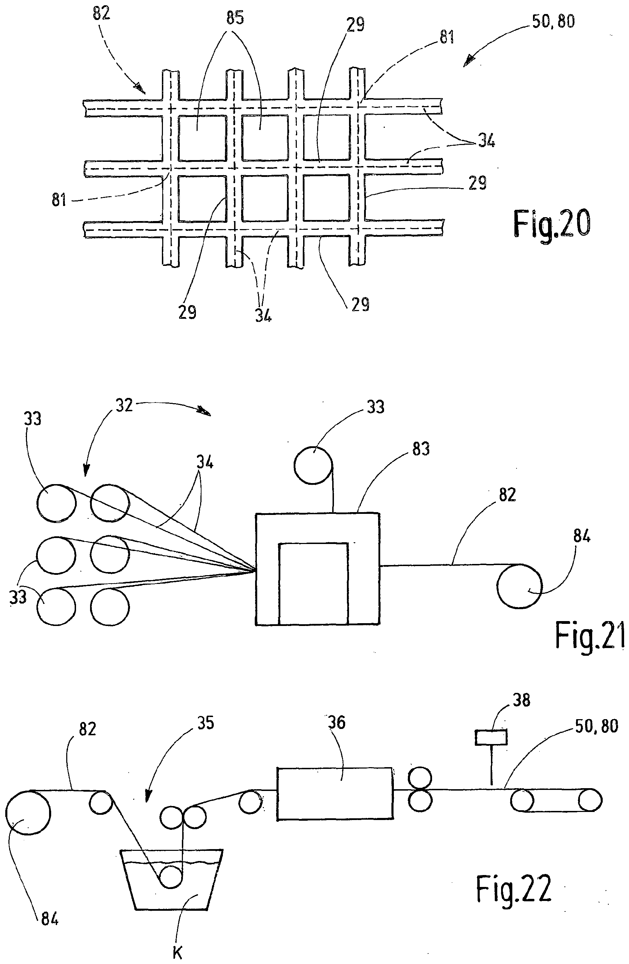

In Figur 20 ist ein Bewehrungselement 50 in Form eines Bewehrungsgitters 80 veranschaulicht. Das Bewehrungsgitter 80 ist dadurch gebildet, dass mehrere Verstärkungsfäden 34 zunächst eine Textilstruktur 82 mit einer oder mehreren Verbindungsstellen bzw. Kreuzungsstellen 81 bilden. An der Kreuzungsstelle 81 können die sich kreuzenden Verstärkungsfäden 34 lose aufeinander liegen oder unmittelbar textile miteinander gebunden sein oder mittelbar über wenigstens einen Bindefaden eines Bindungssystems gehalten oder verbunden sein. Diese Textilstruktur 82 kann als Gelege und/oder Gewebe und/oder Gewirk und/oder Gestrick ausgeführt sein. Es ist möglich, lediglich an bestimmten Kreuzungsstellen 81 eine textile Bindung vorzusehen, während an anderen Kreuzungsstellen die Verstärkungsfäden in Form eines Geleges bzw. als Flottage oder dergleichen lose aneinander liegen. Wird die Textilstruktur 82 durch ein Gewebe gebildet, lassen sich beliebige Bindungen realisieren, wie etwa eine Leinwandbindung, eine Körperbindung, eine Atlasbindung, eine Dreherbindung, usw. Die Bindungsarten sind auch beliebig miteinander kombinierbar.

Diese Textilstruktur 82 wird insgesamt in eine Kunststoffmatrix eingebettet. Das Bewehrungsgitter 80 entsteht bei diesem Ausführungsbeispiel somit nicht durch Verbinden von zunächst hergestellten Bewehrungsstäben 30, sondern es wird zuerst die Textilstruktur 82 hergestellt und dann in eine Kunststoffmatrix eingebettet.

Der prinzipielle Verfahrensablauf zur Herstellung eines Bewehrungsgitters 80 mit Textilstruktur 82 ist beispielhaft in den Figuren 21 und 22 anhand eines Ausführungsbeispiels dargestellt, z.B. mit Tränkung des Textils über ein Tauchbadverfahren. Die Verstärkungsfäden 34 werden in einer Textilmaschine 83, beispielsweise einer Webmaschine oder einer Wirkmaschine zugeführt und dort in die gewünschte Textilstruktur 82, beispielsweise einer Gitterstruktur, verbunden. Diese Textilstruktur 82 kann auf eine Speicherrolle 84 aufgewickelt werden, beispielsweise zur Zwischenlagerung. Bei Bedarf kann die Textilstruktur 82 von der Speicherrolle 84 abgezogen und in die Kunststoffmatrix eingebettet werden. Dies kann durch Tränken der Textilstruktur 82 in dem Bad 35 mit flüssigem Kunststoff K analog zu den Ausführungsbeispielen gemäß den Figuren 1, 10, 11 und 12 erfolgen. Die getränkte Textilstruktur 82 wird dann in einer Form 36 bzw. offen in einem Ofen teilweise oder vollständig ausgehärtet. Schließlich kann das dadurch hergestellte Bewehrungsgitter 80 über ein Trennwerkzeug 38 in der gewünschten Länge abgetrennt werden.

Die in den Figuren 21 und 22 getrennt dargestellten Prozessteile können auch miteinander verbunden werden. Die in der Textilmaschine 83 hergestellte Textilstruktur 82 kann auch unmittelbar dem Bad 35 zugeführt werden. Eine Zwischenspeicherung ist nicht erforderlich.

Die Anzahl der Fadenlagen oder Gruppen der Textilstruktur 82 kann variieren. Die Textilstruktur 82 hat wenigstens zwei Gruppen von Verstärkungsfäden, wobei die Verstärkungsfäden 34 innerhalb einer Gruppe im Wesentlichen parallel zueinander verlaufen. Beim Ausführungsbeispiel nach Figur 20 sind zwei Gruppen von Verstärkungsfäden vorgesehen, die in etwa rechtwinklig zueinander ausgerichtet sind. Die Verstärkungsfäden 34 einer gemeinsamen Gruppe bilden in etwa parallel verlaufende Stränge mit jeweils einem oder mehreren Verstärkungsfäden, die mit Abstand zueinander angeordnet sind. Es ist auch möglich, beispielsweise drei oder mehr solcher Gruppen von Verstärkungsfäden 34 anzuordnen. Der Winkel, unter dem sich die Verstärkungsfäden der Gruppen schneiden, hängt von der Anzahl und der Orientierung der Gruppen ab und kann abhängig vom Anwendungsfall gewählt werden.

In allen Fällen hat die Textilstruktur 82 ausreichend große Maschen bzw. Öffnungen 85, um den Verbund mit der Betonmatrix 49 herstellen zu können.

Die Textilstruktur 82 kann auch ein Verstärkungssystem mit gestreckten Verstärkungsfäden 34 aufweisen, die über ein Bindungssystem mit wenigstens einem Verbindungsfaden gehalten oder an den Kreuzungsstellen 81 verbunden sind. Beim Wirken kann dies durch einen Wirkfaden erfolgen. Beim Weben beispielsweise durch einen Dreherfaden. Beim Dreherweben können aber auch die Verstärkungsfäden 34 unmittelbar miteinander verbunden werden. Hier sind vielfältige Ausgestaltungs- und Abwandlungsmöglichkeiten denkbar.

In den Figuren 17-19 ist schematisch veranschaulicht, dass ein Bewehrungselement 50 und beispielsgemäß das Bewehrungsgitter 51 aus seiner im Wesentlichen zweidimensionalen Form in eine dreidimensionale Gestalt umgeformt werden kann. Zum Beispiel kann es an einer oder mehreren Biegestellen 45 lokal erwärmt werden, so dass sich dort die Quervernetzungen wieder lösen. Anschließend kann es mit Hilfe eines Formwerkzeugs 57 in die gewünschte Form gebracht werden. Das Formwerkzeug 57 kann alternativ zu der stark schematisierten Darstellung in den Figuren 18 und 19 auch zwei Formwerkzeugteile 57 aufweisen, zwischen denen das umzuformende Bewehrungselement 50 eingeschlossen bzw. eingeklemmt wird, um es in die gewünschte Form zu bringen.

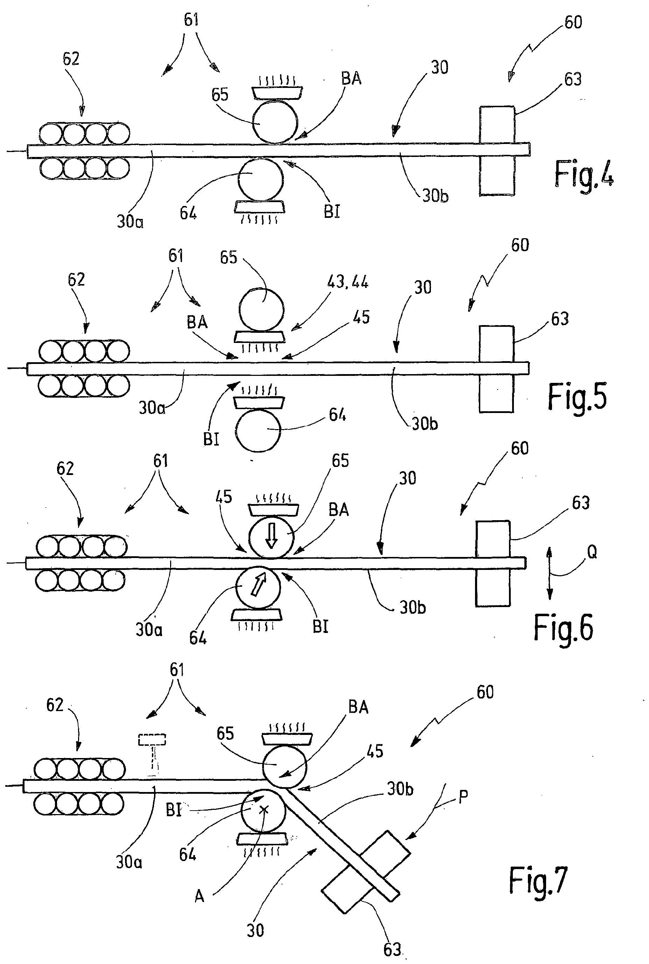

In den Figuren 4-7 ist schematisch ein Verfahren sowie eine Biegevorrichtung 60 zum Biegen eines Bewehrungsstabes 30 veranschaulicht. Der Bewehrungsstab 30 erstreckt sich beispielsgemäß ursprünglich geradlinig. Zu der Biegevorrichtung 60 gehört beispielsgemäß die Energieeintragseinrichtung 43 bzw. die Heizeinrichtung 44, sowie eine Werkzeuganordnung 61. Die Werkzeuganordnung 61 weist außerdem eine Halteeinrichtung 62, ein Umformwerkzeug 63 sowie an der Biegestelle 45 ein erstes Werkzeugteil 64 und optional ein zweites Werkzeugteil 65 auf. Ausgehend von der Biegestelle 45 erstreckt sich der Bewehrungsstab 30 mit einem ersten Stababschnitt 30a in eine erste Richtung und mit einem zweiten Stababschnitt 30b in eine andere und beispielsgemäß die entgegengesetzte Richtung. Die Halteeinrichtung 62 ist dazu eingerichtet, am ersten Stababschnitt 30a anzugreifen und den Bewehrungsstab 30 während des Biegevorgangs abzustützen. Das Umformwerkzeug 63 ist dazu eingerichtet, am zweiten Stababschnitt 30b anzugreifen. Die Halteinrichtung 62 und das Umformwerkzeug 63 sind relativ zueinander bewegbar, um den Bewehrungsstab 30 um eine Biegeachse A zu biegen. Beim Ausführungsbeispiel ist das Umformwerkzeug 63 bewegbar ausgeführt, während die Halteeinrichtung 62 gegenüber einer Maschinenbasis der Biegevorrichtung 60 unbeweglich sein kann. Alternativ oder zusätzlich könnte auch die Halteeinrichtung 62 bewegbar gegenüber der Maschinenbasis ausgeführt sein.

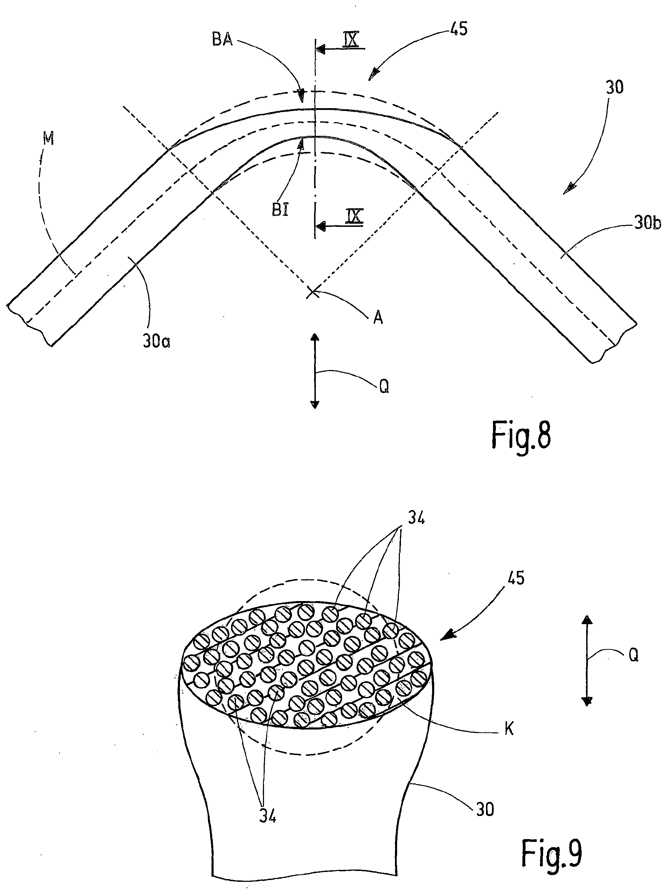

Die Biegeachse A wird beispielsgemäß durch das erste Werkzeugteil 64 definiert. Das erste Werkzeugteil 64 ist dazu eingerichtet, den Bewehrungsstab 30 an der Biegestelle 64 an einer Biegeinnenseite BI abzustützen. Die Biegeinnenseite BI des Bewehrungsstabes 30 befindet sich auf der der Biegeachse A zugewandten Seite des Bewehrungsstabes 30. Gegenüber einer Mittelachse M (Figur 8) des Bewehrungsstabes 30 befindet sich an der Biegestelle 45 diametral gegenüberliegend zur Biegeinnenseite BI bzw. entgegengesetzt zur Biegungsinnenseite BI eine Biegungsaußenseite BA. Die herzustellende Krümmung an der Biegestelle 45 ist auf der Biegungsinnenseite BI betragsmäßig größer als auf der Biegungsaußenseite BA.

Bei dem hier veranschaulichten Beispiel wird an der Biegestelle 45 eine Biegung hergestellt, die einen im Wesentlichen konstanten Radius an der Biegungsinnenseite BI und der Biegungsaußenseite BA bzw. den dazwischenliegenden konzentrischen Biegungsebenen aufweist. Die Innenkrümmung an der Biegungsinnenseite BI ist betragsmäßig am größten bzw. der Biegungsradius ist an der Biegungsinnenseite BI am kleinsten. Die Außenkrümmung an der Biegungsaußenseite BA hat den kleinsten Betrag bzw. der Biegungsradius ist an der Biegungsaußenseite BA am größten (siehe insbesondere Figur 8). Um die definierte Krümmung herzustellen, weist das erste Werkzeug 64 eine Angriffsfläche auf, deren Krümmung herzustellende Innenkrümmung an der Biegungsinnenseite BI entspricht. Beim Ausführungsbeispiel ist das erste Werkzeug 64 und vorzugsweise auch das zweite Werkzeug 65 jeweils durch eine Rolle bzw. Walze gebildet. Die Walze für das erste Werkzeug 64 hat an der Anlagestelle mit der Biegungsinnenseite BI einen Radius, der dem herzustellenden Radius an der Biegungsinnenseite BI entspricht.

Wie es in den Figuren 4-7 schematisch veranschaulicht ist, wird der Bewehrungsstab 30 vor dem Biegen mittels der Heizeinrichtung 44 an der Biegestelle 45 lokal erwärmt. Das lokale Erwärmen hat den Vorteil, dass die Verstärkungsfäden 34 außerhalb der Biegestelle 45 ihre Zugspannung nicht verlieren, mit der sie in die Kunststoffmatrix eingebettet sind.

Nach dem lokalen Erwärmen zum Auflösen der Quervernetzungen ist der Bewehrungsstab 30 an der Biegestelle 45 umformbar. An dem ersten Stababschnitt 30a wird der Bewehrungsstab durch die Halteeinrichtung 62 abgestützt. Auf der anderen Seite der Biegestelle 45 greift das Umformwerkzeug 63 an und führt eine Biegebewegung gemäß Pfeil P (Figuren 6 und 7) auf einem Bogen um die Biegeachse A und/oder eine lineare Bewegung mit Abstand zur Biegeachse A durch. Dabei kann das Umformwerkzeug 63 relativ zum zweiten Stababschnitt 30b in dessen Erstreckungsrichtung bewegt werden bzw. gleiten. Es ist auch möglich, den zweiten Stababschnitt 30b fest in dem Umformwerkzeug 63 einzuspannen, wenn beispielsweise der erste Stababschnitt 30a in seiner Erstreckungsrichtung relativ zur Halteeinrichtung 62 bewegbar ist.

Während der Durchführung der Biegebewegung gemäß Pfeil P stützt sich der Bewehrungsstab 30 am ersten Werkzeugteil 64 ab und erhält dabei eine definierte Biegung.

Bei dem hier beschriebenen bevorzugten Ausführungsbeispiel wird nach dem Auflösen der Quervernetzung an der Biegestelle 45 die Querschnittskontur des Bewehrungsstabes 30 an der Biegestelle 45 umgeformt. Hierzu werden die beiden Werkzeugteile 64, 65 in einer Querrichtung Q relativ zueinander bewegt und drücken von entgegengesetzten Seiten her gegen den Bewehrungsstab 30, um dessen Querschnittskontur umzuformen (Figur 6). Dadurch wird die Abmessung des Bewehrungstabes 30 in Querrichtung Q an der Biegestelle 45 reduziert und seine Abmessung rechtwinklig zur Querrichtung Q und parallel zur Biegeachse A vergrößert (Figur 9). In Figur 9 ist schematisch veranschaulicht, wie der ursprünglich kreisrunde Querschnitt (gestrichelt veranschaulicht) an der Biegestelle 45 umgeformt und eine im Wesentlichen ovale oder elliptische Kontur erhält, wobei die Abmessung des Querschnitts in Querrichtung Q kleiner ist als rechtwinklig dazu.

Durch dieses Umformen bzw. Ausprägen mittels der beiden Werkzeugteile 64, 65 wird erreicht, dass sich die benachbart zu der Biegungsinnenseite BI verlaufenden Verstärkungsfäden im Bereich der Biegestelle 45 sozusagen strecken und von der Biegungsseite BI weg verlagert werden. Dadurch wird verhindert, dass die Verstärkungsfäden 34 im Bereich der Biegungsinnenseite BI Wellen bilden und damit die Zugfestigkeit des Bewehrungsstabes 30 bzw. eines daraus hergestellten Bewehrungselements 50 schwächen. An der entgegengesetzten Biegungsaußenseite BA werden die Verstärkungsfäden 34 aufgrund des zunehmenden Weges von der Biegungsaußenseite BA weg verlagert. Der Betrag der Querschnittsfläche des Bewehrungsstabes 30 bleibt an der Biegungsstelle 45 im Wesentlichen konstant. Lediglich die Abmessungen in Querrichtung Q und rechtwinkelig dazu verändern sich.

Dieses Umformen der Querschnittsgestalt des Bewehrungsstabes 30 an der Biegestelle 45 kann vor dem Ausführen der Biegebewegung durchgeführt werden (vergleiche Figuren 6 und 7). Es ist auch möglich, gleichzeitig mit der Verformung der Querschnittskontur (Figur 6) zumindest phasenweise auch die Biegebewegung gemäß Pfeil P durchzuführen (Figur 7).

Bei dem bislang beschriebenen Ausführungsbeispiel hat der Bewehrungsstab 30 eine im Wesentlichen ebene Außenfläche. Darunter ist eine Außenfläche zu verstehen, deren Unebenheit durch das verwendeten Kunststoff K definiert wird. Bei einem abgewandelten Ausführungsbeispiel kann diese Außenfläche auch mit Vorsprüngen und/oder Vertiefungen ausgeführt sein, so dass eine unebene bzw. raue Außenoberfläche erreicht ist, wobei die Unebenheit und/oder Rauheit größer ist als die durch den Kunststoff K selbst vorgegebene die Unebenheit bzw. Rauheit.

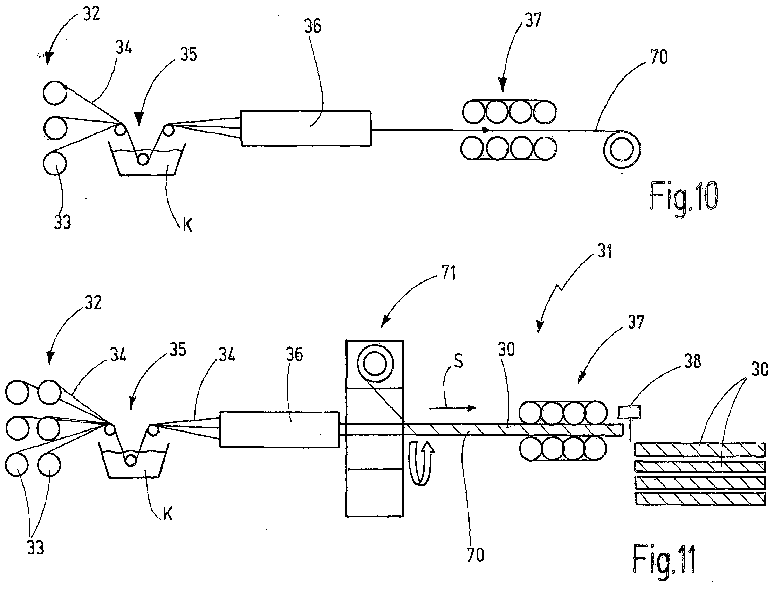

Eine erste Möglichkeit hierzu besteht darin, an dem Bewehrungsstab 30 während seiner Herstellung oder nach seiner Herstellung ein Rippenelement 70 anzubringen. Das Rippenelement 70 kann beispielsweise durch ein linienhaftes Element gebildet sein, das schraubenförmig oder wendelförmig im Bereich der Außenfläche des Bewehrungsstabes angebracht wird. Das Rippenelement 70 kann aus einem reversibel vernetzbaren Harzsystem oder einem duroplastischen Harz, wie etwa Epoxidharz, Vinylesterharz und Verstärkungsfäden 34 hergestellt werden, z.B. in einem Pultrusionsprozess (Figur 10), der analog zur Herstellung des Bewehrungsstabes 30 erfolgen kann. Lediglich die Anzahl der verwendeten Verstärkungsfasern 34 ist dabei geringer, so dass ein im Querschnitt dünneres Rippenelement 70 gebildet wird. Das hergestellte Rippenelement 70 kann während des Herstellungsprozesses des Bewehrungsstabes 30 vor dem Aushärten bzw. vollständigen Aushärten des Kunststoffes K auf die Außenoberfläche aufgewickelt werden und verbindet sich dann beim Aushärten des Kunststoffes K mit dem Bewehrungsstab 30.

Das Herstellungsverfahren des Bewehrungsstabes 30 kann analog zu dem anhand von Figur 1 geschilderten Verfahren ablaufen. Im Anschluss an die Form 36 wird dann über eine Wickeleinheit 71 das Rippenelement 70 schraubenförmig um den noch nicht ausgehärteten Bewehrungsstab 30 gewickelt. Beispielsweise kann sich die Wickeleinheit 71 um den Bewehrungsstab 30 drehen, während dieser durch die Abzugseinrichtung entlang seiner Erstreckungsrichtung S bewegt wird. Schließlich wird der Bewehrungsstab 30 in die gewünschte Länge abgetrennt, beispielsgemäß mittels dem Trennwerkzeug 38. Dieses Verfahren kann als "Hart in Nass" bezeichnet werden, weil das bereits ausgehärtete Rippenelement 70 in die noch nicht ausgehärtete Kunststoffmatrix des Bewehrungsstabes 30 eingebracht wird.

Alternativ hierzu ist es auch möglich, ein Verfahren "Nass in Nass" auszuführen. Dabei wird das Rippenelement 70 im noch nicht ausgehärteten Zustand, sondern ebenfalls im erwärmten Zustand mit aufgelösten Quervernetzungen auf den Bewehrungsstab 30 aufgebracht. Dies kann entweder dadurch geschehen, dass das vorgefertigte Rippenelement 70 erneut erwärmt wird, um die Quervernetzungen aufzulösen oder dass die Herstellung des Rippenelements 70 zeitgleich mit der Herstellung des Bewehrungsstabes 30 ausgeführt und das noch nicht ausgehärtete Rippenelement 70 der Herstellungsvorrichtung 31 zur Herstellung des Bewehrungsstabes 30 zugeführt und dann auf den noch nicht ausgehärteten Bewehrungsstab 30 aufgewickelt wird (analog zum vorstehenden Verfahren "Hart in Nass").

Durch das Verrippen des Bewehrungsstabes 30 kann der Verbund des Bewehrungsstabes 30 bzw. des Bewehrungselements 50 mit einem Betonbauteil 48 verbessert werden. Der Vorteil der Verwendung eines reversibel vernetzbaren Harzes liegt darin, dass die Verrippung nach dem Abkühlen und Wiedervernetzen des Harzes höhere Festigkeiten und geringere Kriechneigung aufweist, da die Verbindung über das vernetzte Polymer und damit kovalente Bindungen erfolgt.

Die Verbesserung des Verbundes zwischen Bewehrung und Beton lässt sich alternativ oder zusätzlich auch dadurch erreichen, dass in die Kunststoffmatrix des Bewehrungsstabes 30 Partikel 72, wie etwa Sandkörner, eingebracht werden. Dadurch kann die Außenoberfläche des Bewehrungsstabes eine unebene bzw. raue Struktur mit Erhebungen und Vertiefungen in Partikelgröße erhalten, die größer ist als die Unebenheit bzw. Rauheit des Kunststoffes K der Kunststoffmatrix.

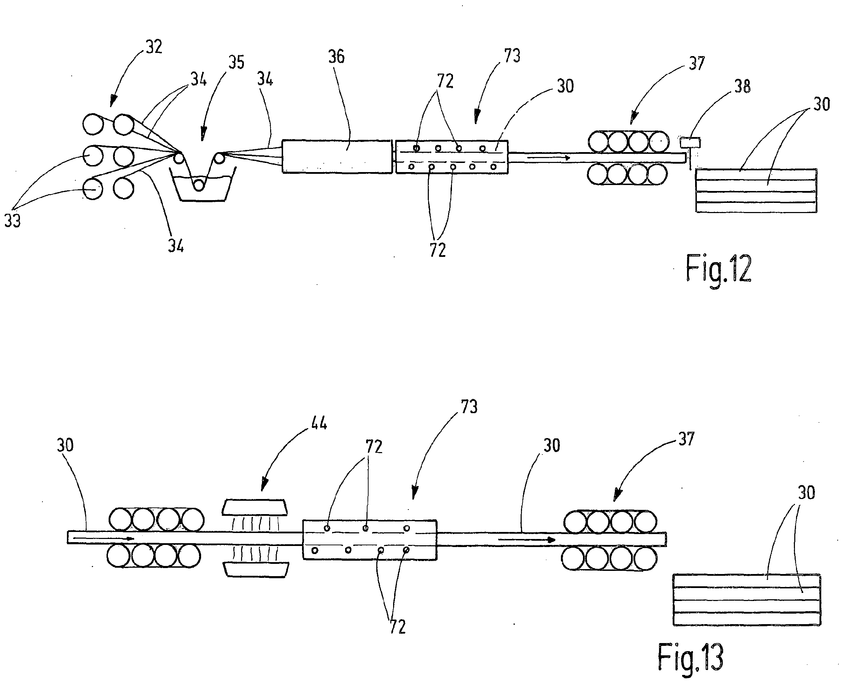

Eine erste Möglichkeit zum Einbringen von Partikeln 72 in die Kunststoffmatrix des Kunststoffes K ist in Figur 12 veranschaulicht. Dort ist in die Herstellungsvorrichtung 31 zur Herstellung des Bewehrungsstabes 30 eine Partikeleintragseinrichtung 73 im Anschluss an die Form 36 vorhanden. Vor dem Aushärten des Kunststoffes K werden die Partikel 72 in der Partikeleintragseinrichtung 73 auf die noch nicht ausgehärtete Oberfläche bzw. Außenfläche des Kunststoffes K aufgebracht, beispielsweise durch einen Gasstrom, der die Partikel 72 trägt und auf die Außenfläche des Kunststoffes K gerichtet ist. Aufgrund der kinetischen Energie bzw. Aufprallenergie und/oder durch zusätzliche Druckaufbringung in der Partikeleintragseinrichtung 73 gelangen die Partikel 72 zumindest partiell in die Kunststoffmatrix und dringen so in der thermoplastischen Phase des Kunststoffes K in die Oberfläche ein. Auf diese Weise ist eine raue bzw. unebene Außenfläche erreicht. Die Partikel 72 verbinden sich durch Aushärten der Kunststoffmatrix mit dem Kunststoff K. Im Übrigen läuft das Verfahren analog zu dem anhand von Figur 1 geschilderten Herstellungsverfahren mittels der Herstellungsvorrichtung 31 ab.

Alternativ zu dem Verfahren nach Figur 12 kann das Aufbringen der Partikel 72 auch im Anschluss an die Herstellung der Bewehrungsstäbe 30 gemäß des in Figur 1 gezeigten und vorstehend beschriebenen Verfahrens erfolgen. Hierfür kann der Bewehrungsstab 30 über eine Heizeinrichtung 44 erwärmt werden, so dass der Kunststoff K wieder in seine thermoplastische Phase übergeht. Anschließend kann analog zum Verfahren nach Figur 12 mittels der Partikeleintragseinrichtung 73 die Partikel 72 in die Kunststoffmatrix im Bereich der Außenfläche eingebracht werden. Auf diese Weise ist es ebenfalls möglich nur Teile der Bewehrungsstäbe dort zu besanden bzw. mit Partikeln 72 zu versehen, wo es technisch notwendig ist.

Es ist auch möglich, sowohl ein Rippenelement 70, als auch Partikel 72 aufzubringen. Die Kombination kann ebenfalls örtlich begrenzt erfolgen.

Die Erfindung betrifft ein Betonbauteil 48 gemäß Anspruch 1 mit einer Betonmatrix 49, in der wenigstens ein Bewehrungselement 50 angeordnet ist, wobei das Bewehrungselement 50 wenigstens einen Bewehrungsteil 29 hat, ein Verfahren zu dessen Herstellung und ein Verfahren zum Biegen eines Bewehrungselements 50. Wesentlich für die Erfindung ist, dass der wenigstens eine Bewehrungsteil einen oder mehrere Verstärkungsfäden 34 bzw. Verstärkungsgarne aufweist, die in einer Kunststoffmatrix aus einem Kunststoff K angeordnet sind. Der Kunststoff K ist als reversibel quervernetzter Kunststoff ausgeführt. Er weist Molekülketten und insbesondere Polymerketten auf, die reversibel herstellbare Quervernetzungen enthalten. Die Quervernetzungen lassen sich zu einem überwiegenden Teil und mindestens zu 50% durch Eintragen von Energie, insbesondere Wärme, in den Kunststoff K auflösen und durch erneutes Abkühlen wieder vernetzen. Dadurch ist es möglich, ein Bewehrungselement 50 in vollständig ausgehärteter Form als Standardelement, wie etwa als Bewehrungsstab mit einem einzigen Bewehrungsteil oder als Bewehrungsgitter mit schräg oder rechtwinkelig miteinander verbundenen Bewehrungsteilen herzustellen und zu lagern. Abhängig vom Anwendungsfall kann das hergestellte Bewehrungselement 50 in die gewünschte Form umgeformt werden, indem die Quervernetzungen an einer oder mehreren Stellen durch Energieeintrag aufgelöst, das Bewehrungselement umgeformt und anschließend durch Wiederherstellung der Quervernetzungen wieder ausgehärtet wird. Dieser Prozess kann mehrfach wiederholt werden, so dass beispielsweise auch auf der Baustelle vor Ort Anpassungen am Bewehrungselement möglich sind.

### BEZUGSZEICHENLISTE

- 30: Bewehrungsstab
- 30a: erster Stababschnitt
- 30b: zweiter Stababschnitt
- 31: Herstellungsvorrichtung
- 32: Gatter
- 33: Spule
- 34: Verstärkungsfaden
- 35: Bad
- 36: Form
- 37: Abzugseinrichtung
- 38: Trennwerkzeug

- 43: Energieeintragseinrichtung
- 44: Heizeinrichtung
- 45: Biegestelle
- 46: Ultraschalleinrichtung
- 46a: Sonotrode
- 46b: Formwerkzeugende
- 47: Gegenhaltewerkzeug
- 48: Betonbauteil
- 49: Betonmatrix
- 50: Bewehrungselement
- 51: Bewehrungsgitter
- 52: Träger
- 53: erste Lage
- 54: zweite Lage
- 55: Andrückanordnung
- 56: Walze
- 57: Formwerkzeug
- 58: Verbindungsstelle
- 60: Biegevorrichtung
- 61: Werkzeuganordnung
- 62: Halteeinrichtung
- 63: Umformwerkzeug
- 64: erstes Werkzeugteil
- 65: zweites Werkzeugteil

- 70: Rippenelement
- 71: Wickeleinheit
- 72: Partikel
- 73: Partikeleintragseinrichtung

- 80: Bewehrungsgitter
- 81: Kreuzungsstelle
- 82: Textilstruktur
- 83: Textilmaschine
- 84: Speicherrolle
- 85: Öffnung

- A: Biegeachse
- BA: Biegungsaußenseite
- BI: Biegungsinnenseite
- d: Dicke des Bewehrungselements
- K: Kunststoff
- M: Mittelachse
- Q: Querrichtung
- S: Erstreckungsrichtung

## Patentansprüche

1. Betonbauteil (48) mit einer Betonmatrix (49), in die wenigstens ein Bewehrungselement (50) zur Bewehrung eingebettet ist, wobei das Bewehrungselement (50) wenigstens einen Bewehrungsteil (29) in Form eines Bewehrungsstabes (30) aufweist,
wobei sich der wenigstens eine Bewehrungsstab (30) in
einer Erstreckungsrichtung (S) erstreckt und wenigstens einen Verstärkungsfaden (34) aufweist,
und wobei der wenigstens eine Verstärkungsfaden (34) in einer Kunststoffmatrix des Bewehrungsstabes (30) angeordnet ist, die aus einem reversibel quervernetzten Kunststoff (K) besteht, dessen Quervernetzungen mehrfach reversibel auftrennbar und wieder herstellbar sind, und dabei derart auftrennbar sind, dass der Bewehrungsstab (30) biegbar ist,
wobei sich zumindest einer der vorhandenen Bewehrungsstäbe (30) in wenigstens einem Stababschnitt (30a, 30b) oder über seine gesamte Länge geradlinig erstreckt und wobei der wenigstens eine Verstärkungsfaden (34) entlang des wenigstens einen sich geradlinig erstreckenden Stababschnitts (30a, 30b) oder über seine gesamte Länge unter einer Zugspannung in der Kunststoffmatrix angeordnet ist.

2. Betonbauteil nach Anspruch 1,
**dadurch gekennzeichnet, dass** das Bewehrungselement (50) mehrere miteinander verbundene Bewehrungsstäbe (30) aufweist.

3. Betonbauteil nach Anspruch 1 oder 2,
**dadurch gekennzeichnet, dass** zumindest einer der vorhandenen Bewehrungsstäbe (30) wenigstens eine Biegestelle (45) aufweist.

4. Betonbauteil nach Anspruch 3,
**dadurch gekennzeichnet, dass** sich zumindest einige der Verstärkungsfäden (34) an der Biegestelle (45) schräg zu der Erstreckungsrichtung (S) erstrecken und wobei sich ihr Abstand zu einer Mittelachse (M) des zumindest einen Bewehrungsstabes (30) verringert.

5. Betonbauteil nach Anspruch 3 oder 4,
**dadurch gekennzeichnet, dass** die Biegestelle (45) eine Biegungsinnenseite (BI) mit einer Innenkrümmung und eine der Biegungsinnenseite (BA) bezüglich einer Mittelachse (M) des zumindest einen Bewehrungsstabes (30) gegenüberliegende Biegungsaußenseite (BA) mit einer Außenkrümmung aufweist, wobei die Innenkrümmung des Bewehrungsstabes größer ist als die Außenkrümmung, und wobei keiner der Verstärkungsfäden (34) an der Biegestelle (45) eine Krümmung aufweist, die größer ist als die Innenkrümmung.

6. Betonbauteil nach einem der vorhergehenden Ansprüche,
**dadurch gekennzeichnet, dass** jeder Bewehrungsstab (30) mehrere Verstärkungsfäden hat, die eine Textilstruktur (82) mit Kreuzungsstellen (81) und/oder textilen Bindungsstellen bilden und dass die Textilstruktur (82) in die Kunststoffmatrix eingebettet ist.

7. Betonbauteil nach einem der vorhergehenden Ansprüche,
**dadurch gekennzeichnet, dass** der Kunststoff (K) der Kunststoffmatrix eine Glasübergangstemperatur von mindestens 50°C oder 80°C oder 90°C oder 100°C aufweist.

8. Betonbauteil nach einem der vorhergehenden Ansprüche,
**dadurch gekennzeichnet, dass** der reversibel quervernetzte Kunststoff (K) mittels einer Diels-Alder-Reaktion vernetzbar ist und mittels einer Retro-Diels-Alder-Reaktion auftrennbar ist.

9. Betonbauteil nach einem der Ansprüche 1 bis 7,
**dadurch gekennzeichnet, dass** zumindest einige der Quervernetzungen des reversibel quervernetzten Kunststoffs (K) mittels elektromagnetischer Strahlung und/oder mittels Ultraschallanregung auftrennbar sind und/oder dass zumindest einige der Quervernetzungen des reversibel quervernetzten Kunststoffs (K) mittels elektromagnetischer Strahlung vernetzbar sind.

10. Verfahren zur Herstellung eines Betonbauteils (48) mit einer Betonmatrix (49) und wenigstens einem Bewehrungselement (50), das wenigstens einen Bewehrungsteil (29) in Form eines Bewehrungsstabes (30) aufweist, mit folgenden Schritten:
- Bereitstellen mehrerer Verstärkungsfäden (34),
- Einbringen der Verstärkungsfäden (34) in eine Kunststoffmatrix aus einem aus einem reversibel quervernetzten Kunststoff (K), dessen Quervernetzungen mehrfach reversibel auftrennbar und wieder herstellbar sind, und dabei derart auftrennbar sind, dass der Bewehrungsstab (30) biegbar ist,
- Aushärten der Kunststoffmatrix zur Herstellung des wenigstens einen Bewehrungsstabes (30) des Bewehrungselements (50), wobei sich zumindest einer der vorhandenen Bewehrungsstäbe (30) in wenigstens einem Stababschnitt (30a, 30b) oder über seine gesamte Länge geradlinig erstreckt und wobei der wenigstens eine Verstärkungsfaden (34) entlang des wenigstens einen sich geradlinig erstreckenden Stababschnitts (30a, 30b) oder über seine gesamte Länge unter einer Zugspannung in der Kunststoffmatrix angeordnet ist,
- Einbetten des wenigstens einen Bewehrungsstabes (30) des Bewehrungselement (50) in die Betonmatrix (49),
- Aushärten der Betonmatrix (49).

11. Verfahren zum Biegen eines Bewehrungsstabes (30), der sich in einer Erstreckungsrichtung (S) erstreckt und wenigstens einen Verstärkungsfaden (34) aufweist, wobei der wenigstens eine Verstärkungsfaden (34) in einer Kunststoffmatrix des Bewehrungsstabes (30) angeordnet ist, die aus einem reversibel quervernetzten Kunststoff (K) besteht, dessen Quervernetzungen mehrfach reversibel auftrennbar und wieder herstellbar sind, und dabei derart auftrennbar sind, dass der Bewehrungsstab (30) umformbar ist, wobei sich zumindest einer der vorhandenen Bewehrungsstäbe (30) in wenigstens einem Stababschnitt (30a, 30b) oder über seine gesamte Länge geradlinig erstreckt und wobei der wenigstens eine Verstärkungsfaden (34) entlang des wenigstens einen sich geradlinig erstreckenden Stababschnitts (30a, 30b) oder über seine gesamte Länge unter einer Zugspannung in der Kunststoffmatrix angeordnet ist, mit folgenden Schritten:
- Einbringen von Energie an einer Biegestelle (45) zur Auflösung der Quervernetzung des Kunststoffes (K) der Kunststoffmatrix,
- Biegen des Bewehrungsstabes (30) an der Biegestelle (45),
- Aushärten des Bewehrungsstabes (30) an der Biegestelle (45) .

## Claims

1. Concrete component (48) with a concrete matrix in which at least one reinforcing element (50) is embedded for reinforcement, wherein the reinforcing body (50) has at least one reinforcing part (29) in the form of a reinforcing bar (30),
wherein the at least one reinforcing bar (30) extends in an extent direction (S) and has at least one reinforcing thread (34),
and wherein the at least one reinforcing thread (34) is arranged in a plastic matrix of the reinforcing bar (30) which consists of a reversibly cross-linked plastic (K), the cross-linkings of which can be repeatedly separated and recreated reversibly and are separable such that the reinforcing bar (30) is flexible,
wherein at least one of the present reinforcing bars (30) extends rectilinearly in at least one bar portion (30a, 30b) or over its entire length, and wherein the at least one reinforcing thread (34) is arranged in the plastic matrix under a tensile stress along the at least one rectilinearly extending bar portion (30a, 30b) or over its entire length.

2. Concrete component according to claim 1, **characterised in that** the reinforcing element (50) comprises several interconnected reinforcing bars (30).

3. Concrete component according to claim 1 or 2, **characterised in that** at least one of the present reinforcing bars (30) has at least one bend site (45).

4. Concrete component according to claim 3, **characterised in that** at least some of the reinforcing threads (34) run obliquely to the extent direction (S) at the bend site (45), and wherein their distance from a central axis (M) of the at least one reinforcing bar (30) reduces.

5. Concrete component according to claim 3 or 4, **characterised in that** the bend site (45) has a bend inside (BI) with an inner curvature and a bend outside (BA) with an outer curvature lying opposite the bend inside (BI) with respect to a central axis (M) of the at least one reinforcing bar (30), wherein the inner curvature of the reinforcing bar is greater than the outer curvature, and wherein none of the reinforcing threads (34) at the bend site (45) has a curvature which is greater than the inner curvature.

6. Concrete component according to any of the preceding claims, **characterised in that** each reinforcing bar (30) has several reinforcing threads which form a textile structure (82) with crossing sites (81) and/or textile binding sites, and that the textile structure (82) is embedded in the plastic matrix.

7. Concrete component according to any of the preceding claims, **characterised in that** the plastic (K) of the plastic matrix has a glass transition temperature of at least 50°C or 80°C or 90°C or 100°C.

8. Concrete component according to any of the preceding claims, **characterised in that** the reversibly cross-linked plastic (K) is cross-linkable by means of a Diels-Alder reaction and separable by means of a retro-Diels-Alder reaction.

9. Concrete component according to any of claims 1 to 7, **characterised in that** at least some of the cross-linkings of the reversibly cross-linked plastic (K) are separable by means of electromagnetic radiation and/or by means of ultrasound excitation, and/or at least some of the cross-linkings of the reversibly cross-linked plastic (K) are cross-linkable by means of electromagnetic radiation.

10. Method for producing a concrete component (48) with a concrete matrix (49) and at least one reinforcing element (50) which has at least one reinforcing part (29) in the form of a reinforcing bar (30), with the following steps:
- provision of several reinforcing threads (34),
- insertion of the reinforcing threads (34) in a plastic matrix of a reversibly cross-linked plastic (K), the cross-linkings of which can be repeatedly separated and recreated reversibly and are separable such that the reinforcing bar (30) is flexible,
- hardening of the plastic matrix to produce the at least one reinforcing bar (30) of the reinforcing element (50), wherein at least one of the present reinforcing bars (30) extends rectilinearly in at least one bar portion (30a, 30b) or over its entire length, and wherein the at least one reinforcing thread (34) is arranged in the plastic matrix under a tensile stress along the at least one rectilinearly extending bar portion (30a, 30b) or over its entire length,
- embedding the at least one reinforcing bar (30) of the reinforcing element (50) in the concrete matrix (49),
- hardening of the concrete matrix (49).

11. Method for bending a reinforcing bar (30) which extends in an extent direction (S) and has at least one reinforcing thread (34), wherein the at least one reinforcing thread (34) is arranged in a plastic matrix of the reinforcing bar (30) which consists of a reversibly cross-linked plastic (K), the cross-linkings of which can be repeatedly separated and recreated reversibly and are separable such that the reinforcing bar (30) can be reformed, wherein at least one of the present reinforcing bars (30) extends rectilinearly in at least one bar portion (30a, 30b) or over its entire length, and wherein the at least one reinforcing thread (34) is arranged in the plastic matrix under a tensile stress along the at least one rectilinearly extending bar portion (30a, 30b) or over its entire length, with the following steps:
- introduction of energy at a bend site (45) for breaking the cross-linking of the plastic (K) of the plastic matrix,
- bending the reinforcing bar (30) at the bend site (45),
- hardening of the reinforcing bar (30) at the bend site (45).

## Revendications

1. Elément structural en béton (48) comprenant une matrice en béton (49) dans laquelle est incorporé au moins un élément d'armature (50) à des fins d'armature, l'élément d'armature (50) présentant au moins une partie d'armature (29) sous la forme d'une barre d'armature (30),
la barre d'armature (30), au nombre d'au moins une, s'étendant dans une direction d'extension (S) et présentant au moins un fil de renfort (34),
et le fil de renfort (34), au nombre d'au moins un, étant disposé dans une matrice en matière plastique de la barre d'armature (30) qui est constituée d'une matière plastique (K) à réticulation transversale réversible, dont les réticulations transversales peuvent être défaites et rétablies plusieurs fois de manière réversible et peuvent être défaites de telle façon que la barre d'armature (30) puisse être soumise à un cintrage,
au moins une des barres d'armature (30) présentes s'étendant sous une forme rectiligne dans au moins une portion de barre (30a, 30b) ou sur toute sa longueur, et le fil de renfort (34), au nombre d'au moins un, étant disposé avec une contrainte de traction dans la matrice en matière plastique, le long de la portion de barre (30a, 30b) rectiligne, au nombre d'au moins une, ou sur toute sa longueur.

2. Elément structural en béton selon la revendication 1, **caractérisé en ce que** l'élément d'armature (50) présente plusieurs barres d'armature (30) reliées les unes aux autres.

3. Elément structural en béton selon la revendication 1 ou 2, **caractérisé en ce qu'**au moins une des barres d'armature (30) présentes comporte au moins un point de cintrage (45).

4. Elément structural en béton selon la revendication 3, **caractérisé en ce qu'**au point de cintrage (45) au moins quelques-uns des fils de renfort (34) s'étendent en biais par rapport à la direction d'extension (S), et leur distance par rapport à un axe médian (M) de la barre d'armature (30), au nombre d'au moins une, étant réduite.

5. Elément structural en béton selon la revendication 3 ou 4, **caractérisé en ce que** le point de cintrage (45) présente un côté interne de cintrage (BI), avec une courbure intérieure, et un côté externe de cintrage (BA), avec une courbure extérieure, situé en vis-à-vis du côté interne de cintrage (BA) par rapport à un axe médian (M) de la barre d'armature (30), au nombre d'au moins une, la courbure intérieure de la barre d'armature étant plus grande que la courbure extérieure, et aucun des fils de renfort (34) ne présentant, à l'emplacement du point de cintrage (45), une courbure qui soit supérieure à la courbure intérieure.

6. Elément structural en béton selon l'une des revendications précédentes, **caractérisé en ce que** chaque barre d'armature (30) comporte plusieurs fils de renfort qui forment une structure textile (82) comprenant des points de croisement (81) et/ou des points de liage textiles, et **en ce que** la structure textile (82) est noyée dans la matrice en matière plastique.

7. Elément structural en béton selon l'une des revendications précédentes, **caractérisé en ce que** la matière plastique (K) de la matrice en matière plastique présente une température de transition vitreuse d'au moins 50 °C ou 80 °C ou 90 °C ou 100 °C.

8. Elément structural en béton selon l'une des revendications précédentes, **caractérisé en ce que** la matière plastique (K) à réticulation transversale réversible peut être réticulée au moyen d'une réaction de Diels-Alder et peut être défaite au moyen d'une réaction de rétro-Diels-Alder.

9. Elément structural en béton selon l'une des revendications 1 à 7, **caractérisé en ce qu'**au moins quelques-unes des réticulations transversales de la matière plastique (K) à réticulation transversale réversible peuvent être défaites au moyen d'un rayonnement électromagnétique et/ou au moyen d'une excitation par ultrasons, et/ou **en ce qu'**au moins quelques-unes des réticulations transversales de la matière plastique (K) à réticulation transversale réversible peuvent être réticulées au moyen d'un rayonnement électromagnétique.

10. Procédé de fabrication d'un élément structural en béton (48) comprenant une matrice en béton (49) et au moins un élément d'armature (50) qui présente au moins une partie d'armature (29) sous la forme d'une barre d'armature (30), comprenant les étapes suivantes :
- préparation de plusieurs fils de renfort (34),
- mise en place des fils de renfort (34) dans une matrice en matière plastique constituée d'une matière plastique (K) à réticulation transversale réversible, dont les réticulations transversales peuvent être défaites et rétablies plusieurs fois de façon réversible et peuvent être défaites de manière telle que la barre d'armature (30) puisse subir un centrage.
- durcissement de la matrice en matière plastique, en vue de la fabrication de la barre d'armature (30), au nombre d'au moins une, de l'élément d'armature (50), où au moins une des barres d'armature (30) présentes s'étend sous une forme rectiligne dans au moins une portion de barre (30a, 30b) ou sur toute sa longueur, et le fil de renfort (34), au nombre d'au moins un, est disposé avec une contrainte de traction dans la matrice en matière plastique, le long de la portion de barre (30a, 30b) rectiligne, au nombre d'au moins une, ou sur toute sa longueur,
- insertion de la barre d'armature (30), au nombre d'au moins une, de l'élément d'armature (50) dans la matrice en béton (49),
- durcissement de la matrice en béton (49).

11. Procédé de cintrage d'une barre d'armature (30) qui s'étend dans une direction d'extension (S) et présente au moins un fil de renfort (34), le fil de renfort (34), au nombre d'au moins un, étant disposé dans une matrice en matière plastique de la barre d'armature (30) qui est constituée d'une matière plastique (K) à réticulation transversale réversible, dont les réticulations transversales peuvent être défaites et rétablies plusieurs fois de manière réversible et peuvent être défaites de telle façon que la barre d'armature (30) puisse être déformée, au moins une des barres d'armature (30) présentes s'étendant sous une forme rectiligne dans au moins une portion de barre (30a, 30b) ou sur toute sa longueur, et le fil de renfort (34), au nombre d'au moins un, étant disposé avec une contrainte de traction dans la matrice en matière plastique, le long de la portion de barre (30a, 30b) rectiligne, au nombre d'au moins une, ou sur toute sa longueur, comprenant les étapes suivantes :
- apport d'énergie en un point de cintrage (45), aux fins de défaire la réticulation transversale de la matière plastique (K) de la matrice en matière plastique,
- cintrage de la barre d'armature (30) au point de cintrage (45),
- durcissement de la barre d'armature (30) au point de cintrage (45).
